# EUROPEAN PATENT APPLICATION

(11) **EP 4 280 750 A1**
(43) Date of publication of application: **22.11.2023**
(21) Application number: 21925250.9
(22) Date of filing: 10.02.2021
(51) Int. Cl.: H04W 72/04

(54) **COMMUNICATION METHOD AND COMMUNICATION APPARATUS**

(71) Applicant: Huawei Technologies Co., Ltd., Shenzhen, Guangdong 518129 (CN)
(72) Inventor: CHONG, Weiwei, Shenzhen, Guangdong 518129 (CN); XIN, Yang, Shenzhen, Guangdong 518129 (CN); WU, Xiaobo, Shenzhen, Guangdong 518129 (CN)
(74) Representative: Goddar, Heinz J.
(86) International application number: PCT/CN2021/076583
(87) International publication number: WO 2022/170588

(57) **Abstract**

This application provides a communication method, including: A first access and management network element in a first network receives wireless access assistance information from a second network, where the wireless access assistance information includes wireless access information corresponding to a terminal device and a matching condition corresponding to the wireless access information. The first access and management network element determines, based on the wireless access assistance information, wireless access information that needs to be used by the terminal device, and sends the wireless access information that needs to be used by the terminal device to an access network device in the first network. The first access and management network element in the first network receives the wireless access assistance information from the second network, determines the wireless access assistance information that needs to be used by the terminal device, and sends the wireless access assistance information that needs to be used to the access network device in the first network, so that the terminal device can camp on an appropriate mobile communication network, thereby saving network resources and improving user experience.

## Description

### TECHNICAL FIELD

This application relates to the communication field, and more specifically, to a communication method and a communication apparatus.

### BACKGROUND

In an existing communication network, a 5th generation (5th generation, 5G) communication network and a 4th generation (4th generation, 4G) network may be deployed in same coverage. Therefore, a terminal device may access a network through a next generation radio access network (next generation radio access network, NG-RAN) in 5G or a radio access network in the 4G network. That is, the terminal device may access the network through different radio access technologies (radio access technologies, RATs).

In the 5G network, a network side may assist the terminal device in selecting an appropriate target RAT/frequency. However, when the terminal device determines, based on the target RAT/frequency information, that the terminal device needs to access the 4G network, the terminal device may fail to access the 4G network in time, or may fail to return to the 5G network under an appropriate condition after accessing the 4G network. This leads to a waste of network resources, and reduces user experience.

### SUMMARY

This application provides a communication method and a communication apparatus, to save network resources and improve user experience.

According to a first aspect, a communication method is provided, including: A first access and management network element in a first network receives wireless access assistance information from a second network, where the wireless access assistance information includes wireless access information corresponding to a terminal device and a matching condition corresponding to the wireless access information. The first access and management network element determines, based on the wireless access assistance information, wireless access information that needs to be used by the terminal device. The first access and management network element sends the wireless access information that needs to be used by the terminal device to an access network device in the first network.

In a possible implementation, the first network may be a 4G network, and the first access and management network element in the first network may be a mobility management entity (mobility management entity, MME) of the 4G network. The second network may be a mobile network of a different standard from the 4G network, for example, a 5G network, or a mobile network of a higher standard. An access network device in the first network may be an access network device eNB in the 4G network.

According to the solution of this application, the first access and management network element in the first network receives the wireless access assistance information from the second network, determines the wireless access assistance information that needs to be used by the terminal device, and sends the wireless access assistance information that needs to be used to the access network device in the first network, so as to avoid a problem that the first access and management network element in the first network fails to enable the terminal device to access the first network when there is no wireless access assistance information of the terminal device, and ensure that the terminal device camps on an appropriate mobile communication network, thereby saving network resources, and improving user experience.

With reference to the first aspect, in some implementations of the first aspect, a matching condition corresponding to the wireless access information includes at least one of the following matching information: user type information corresponding to the terminal device, time information, location information of the terminal device, service type information used by the terminal device, and network load information.

With reference to the first aspect, in some implementations of the first aspect, that a first access and management network element in a first network receives wireless access assistance information from a second network includes: The first access and management network element receives the wireless access assistance information of the terminal device that is sent by the second access and management network element in the second network.

With reference to the first aspect, in some implementations of the first aspect, that a first access and management network element in a first network receives wireless access assistance information from a second network includes: In a mobility management process of the terminal device, the first access and management network element in the first network receives the wireless access assistance information from the second network.

In a possible implementation, the second access and management network element in the second network may be an access and mobility management function (access and mobility management function, AMF) network element in the 5G network. The mobility management process of the terminal device includes a tracking area update (tracking area update, TAU) process of the terminal device or a redirection process of the terminal device.

With reference to the first aspect, in some implementations of the first aspect, that the first access and management network element receives the wireless access assistance information sent by a second access management network in the second network includes: The first access and management network element receives context information of the terminal device that is sent by the second access and management network element, where the context information includes the wireless access assistance information of the terminal device.

With reference to the first aspect, in some implementations of the first aspect, that the first access and management network element receives the wireless access assistance information sent by a second access management network in the second network includes: The first access and management network element sends a UE context request (UE context request) message to the second access and management network element, where the message is used to request context information of the terminal device. The first access and management network element receives a UE context response (UE context response) message sent by the second access and management network element, where the UE context response message includes the wireless access assistance information of the terminal device.

With reference to the first aspect, in some implementations of the first aspect, that the first access and management network element receives the wireless access assistance information sent by a second access management network in the second network includes: The first access and management network element receives a handover request (handover request) message or a forward relocation request (forward relocation request) message that is sent by the second access and management network element, where the handover request message or the forward relocation request message includes the wireless access assistance information of the terminal device.

With reference to the first aspect, in some implementations of the first aspect, that a first access and management network element in a first network receives wireless access assistance information from a second network includes: The first access and management network element receives the wireless access assistance information from a unified data management function network element in the second network via a home subscriber server (home subscriber server, HSS) in the first network.

With reference to the first aspect, in some implementations of the first aspect, that the first access and management network element receives the wireless access assistance information from a unified data management function network element in the second network via a home subscriber server in the first network includes: The first access and management network element receives, via the home subscriber server HSS in the first network, context information or subscription information of the terminal device that is sent by the unified data management function network element in the second network, where the context information or subscription information includes the wireless access assistance policy of the terminal device.

For example, in a registration process or a tracking area update (Tracking Area Update, TAU) process of the terminal device, the first access and management network element sends a UE location request (UE location request) message to the HSS, where the message is used to obtain information such as a location of the terminal device and subscription data of the terminal device. The HSS may send a UE location response (UE location response) message to the first access and management network element, where the UE location response message includes the wireless access assistance information.

With reference to the first aspect, in some implementations of the first aspect, the wireless access assistance information includes at least one piece of wireless access information corresponding to the terminal device, and the matching condition includes at least one matching condition respectively corresponding to the at least one piece of wireless information. That the first access and management network element determines, based on the wireless access assistance information, wireless access information that needs to be used by the terminal device includes: The first access and management network element determines that the terminal device meets one or more of the at least one matching condition. The first access and management network element determines that wireless access information corresponding to the one or more matching conditions is wireless access information that needs to be used by the terminal device.

With reference to the first aspect, in some implementations of the first aspect, the one or more matching conditions include a matching condition corresponding to the first network; and the wireless access information that needs to be used by the terminal device is used to assist the terminal device in preferentially camping on the first network. Alternatively, the one or more matching conditions include a matching condition corresponding to a first frequency of the first network; and the wireless access information that needs to be used by the terminal device is used to assist the terminal device in preferentially camping on the first frequency.

With reference to the first aspect, in some implementations of the first aspect, the matching condition corresponding to the first network includes a first time condition; and the wireless access information that needs to be used by the terminal device is used to assist the terminal device in preferentially camping on the first network under the first-time condition. Alternatively, a matching condition corresponding to a first frequency of the first network includes a first time condition; and the wireless access information that needs to be used by the terminal device is used to assist the terminal device in preferentially camping on the first frequency.

With reference to the first aspect, in some implementations of the first aspect, the matching condition corresponding to the first network may further include a first location condition, a first service type condition, a first network load condition, and the like.

With reference to the first aspect, in some implementations of the first aspect, the one or more matching conditions include a matching condition corresponding to the second network; and the wireless access information that needs to be used by the terminal device is used to assist the terminal device in preferentially camping on the second network. Alternatively, the one or more matching conditions include a matching condition corresponding to a second frequency of the second network, and the wireless access information that needs to be used by the terminal device is used to assist the terminal device in preferentially camping on the second frequency.

With reference to the first aspect, in some implementations of the first aspect, the matching condition corresponding to the second network includes a second time condition; and the wireless access information that needs to be used by the terminal device is used to assist the terminal device in preferentially camping on the second network under the second time condition. Alternatively, a matching condition corresponding to a second frequency of the second network includes a second time condition; and the wireless access information that needs to be used by the terminal device is used to assist the terminal device in preferentially camping on the first frequency.

With reference to the first aspect, in some implementations of the first aspect, the matching condition corresponding to the second network may further include a second location condition, a second service type condition, a second network load condition, and the like.

With reference to the first aspect, in some implementations of the first aspect, the wireless access information includes a radio access technology RAT/frequency selection priority index (RFSP index).

With reference to the first aspect, in some implementations of the first aspect, the wireless access information includes a subscriber profile ID (subscriber profile ID for RAT/frequency selection priority, SPID).

According to a second aspect, a communication method is provided, including: A second access and management network element in a second network obtains wireless access assistance information of a terminal device, where the wireless access assistance information includes wireless access information corresponding to the terminal device and a matching condition corresponding to the wireless access information. The second access and management network element sends the wireless access assistance information to a first access and management network element in a first network, where the wireless access assistance information is used by the first access and management network element to determine wireless access information that needs to be used by the terminal device and send the wireless access information that needs to be used by the terminal device to an access network device in the first network.

In a possible implementation, the first network may be a 4G network, and the first access and management network element in the first network may be a mobility management entity MME of the 4G network, and the access network device in the first network may be an access network device eNB in the 4G network. The second network may be a mobile network of a different standard from the 4G network, for example, a 5G network, or a mobile network of a higher standard. A second access and management network element in the second network may be an access and mobility management function network element AMF in the 5G network.

According to the solution of this application, the second access and management network element in the second network sends the wireless access assistance information to the first access and management network element in the first network, so that the first access and management network element can determine, through the wireless access assistance information, the wireless access assistance information that needs to be used by the terminal device, and sends the wireless access assistance information that needs to be used to an access network device in the first network. This avoids a problem that the first access and management network element in the first network fails to access the terminal device to the first network when there is no wireless access assistance information of the terminal device, so that the terminal device can camp on an appropriate mobile communication network, thereby saving network resources, and improving user experience.

With reference to the second aspect, in some implementations of the second aspect, a matching condition corresponding to the wireless access information includes at least one of the following matching information: user type information corresponding to the terminal device, time information, location information of the terminal device, service type information used by the terminal device, and network load information.

With reference to the second aspect, in some implementations of the second aspect, that a second access and management network element in a second network obtains wireless access assistance information of a terminal device includes: The second access and management network element obtains the wireless access assistance information of the terminal device from a policy control function network element; or the second access and management network element obtains the wireless access assistance information of the terminal device from a unified data management center network element. The second access and management network element in the second network may be an access and mobility management function network element in the 5G network. In a registration process of the terminal device, the access and mobility management function network element sends a request message to the policy control function network element to obtain an access and mobility policy (AM policy) corresponding to the terminal device. The policy control function network element sends the corresponding access and mobility policy upon the request of the access and mobility management function network element, where the access and mobility policy includes wireless access assistance information of the terminal device.

For another example, in a registration process or a location update process of the terminal device, the access and mobility management function network element sends a context registration request (Nudm_UECM _Registration request) message or a context acquisition request (Nudm_UECM_Get request) of the terminal device to a unified data management center network element. The unified data management center network element may send wireless access assistance information of the terminal device via context registration response (Nudm_UECM_Registration response) message or context acquisition response (Nudm_UECM_Get response) message.

With reference to the second aspect, in some implementations of the second aspect, that the second access and management network element sends the wireless access assistance information to a first access and management network element in a first network includes: In a mobility management process of the terminal device, the second access and management network element sends the wireless access assistance information to the first access and management network element.

In a possible implementation, the mobility management process of the terminal device includes a tracking area update (tracking area update, TAU) process of the terminal device or a redirection process of the terminal device.

With reference to the second aspect, in some implementations of the second aspect, that the second access and management network element sends the wireless access assistance information to a first access and management network element in a first network includes: The second access and management network element sends context information of the terminal device to the first access and management network element, where the context information includes wireless access assistance information of the terminal device. For example, in a mobility management process of the terminal device, the first access and management network element sends a context request (UE context request) message to the second access and management network element, and the second access and management network element may send the wireless access assistance information of the terminal device via context response message (UE context response).

With reference to the second aspect, in some implementations of the second aspect, after the second access and management network element obtains the wireless access assistance information of the terminal device, the method further includes: The second access and management network element determines, based on the wireless access assistance information, wireless access information that needs to be used by the terminal device. The second access and management network element sends, to an access network device in the second network, the wireless access information that needs to be used by the terminal device.

With reference to the second aspect, in some implementations of the second aspect, the wireless access assistance information includes at least one piece of wireless access information corresponding to the terminal device, and the matching condition includes at least one matching condition respectively corresponding to the at least one piece of wireless information. That the second access and management network element determines, based on the wireless access assistance information, wireless access information that needs to be used by the terminal device includes: The second access and management network element determines that the terminal device meets one or more of the at least one matching condition. The second access and management network element determines that wireless access information corresponding to the one or more matching conditions are the wireless access information that needs to be used by the terminal device.

With reference to the second aspect, in some implementations of the second aspect, the one or more matching conditions include a matching condition corresponding to the first network, and the wireless access information that needs to be used by the terminal device is used to assist the terminal device in preferentially camping on the first network. Alternatively, the one or more matching conditions include a matching condition corresponding to a first frequency of the first network, and the wireless access information that needs to be used by the terminal device is used to assist the terminal device in preferentially camping on the first frequency.

With reference to the second aspect, in some implementations of the second aspect, the matching condition corresponding to the first network or the first frequency of the first network includes a first time condition, and the wireless access information that needs to be used by the terminal device is used to assist the terminal device in preferentially camping on the first network or the first frequency of the first network under the first time condition.

With reference to the second aspect, in some implementations of the second aspect, the matching condition corresponding to the first network may further include a first location condition, a first service type condition, a first network load condition, and the like.

With reference to the second aspect, in some implementations of the second aspect, the one or more matching conditions include a matching condition corresponding to the second network, and wireless access information that needs to be used by the terminal device is used to assist the terminal device to preferentially camp on the second network. Alternatively, the one or more matching conditions include a matching condition corresponding to a second frequency of the second network, and the wireless access information that needs to be used by the terminal device is used to assist the terminal device in preferentially camping on the second frequency.

With reference to the second aspect, in some implementations of the second aspect, the matching condition corresponding to the second network or the second frequency of the second network includes a second time condition, and the wireless access information that needs to be used by the terminal device is used to assist the terminal device in preferentially camping on the second network or the second frequency of the second network under the second time condition.

With reference to the second aspect, in some implementations of the second aspect, the matching condition corresponding to the first network may further include a first location condition, a first service type condition, a first network load condition, and the like.

With reference to the second aspect, in some implementations of the second aspect, the wireless access information includes a radio access technology RAT/frequency selection priority index RFSP index.

With reference to the second aspect, in some implementations of the second aspect, the wireless access information includes a subscriber profile ID SPID.

According to a third aspect, a communication method is provided, including: A home subscriber server in a first network receives wireless access assistance information from a second network, where the wireless access assistance information includes wireless access information corresponding to a terminal device and a matching condition corresponding to the wireless access information. The home subscriber server sends the wireless access assistance information to a first access and management network element in a first network, where the wireless access assistance information is used by the first access and management network element to determine wireless access information that needs to be used by the terminal device and send the wireless access information that needs to be used by the terminal device to an access network device in the first network.

In a possible implementation, the first network may be a 4G network, and the home subscriber server in the first network may be a home subscriber server (home subscriber server, HSS) in the 4G network. The first access and management network element in the first network may be a mobility management entity MME in the 4G network, and the second network may be a mobile network of a different standard from the 4G network, for example, a 5G network, or a mobile network of a higher standard. An access network device in the first network may be an access network device eNB in the 4G network.

According to the solution of this application, the home subscriber server in the first network sends, to the first access and management network element in the first network, the wireless access assistance information from the second network, so that the first access and management network element can determine, through the wireless access assistance information, the wireless access assistance information that needs to be used by the terminal device, and sends the wireless access assistance information that needs to be used to an access network device in the first network. This avoids a problem that the first access and management network element in the first network fails to access the terminal device to the first network when there is no wireless access assistance information of the terminal device, so that the terminal device can camp on an appropriate mobile communication network, saving network resources, and improving user experience.

With reference to the third aspect, in some implementations of the third aspect, the wireless access assistance information includes at least one piece of wireless access information corresponding to the terminal device, and the matching condition includes at least one matching condition respectively corresponding to the at least one piece of wireless information.

With reference to the third aspect, in some implementations of the third aspect, the matching condition corresponding to the wireless access information includes at least one of the following matching information: user type information corresponding to the terminal device, time information, location information of the terminal device, service type information used by the terminal device, and network load information.

With reference to the third aspect, in some implementations of the third aspect, that a home subscriber server in a first network receives wireless access assistance information from a second network includes: The home subscriber server receives the wireless access assistance information sent by a policy control function network element in the second network.

With reference to the third aspect, in some implementations of the third aspect, that a home subscriber server in a first network receives wireless access assistance information from a second network includes: In a mobility management process of the terminal device, the home subscriber server receives the wireless access assistance information from the second network.

With reference to the third aspect, in some implementations of the third aspect, that a home subscriber server in a first network receives wireless access assistance information from a second network includes: The home subscriber server receives context information or subscription data of the terminal device from the policy control function network element in the second network, where the context information or subscription data includes the wireless access assistance information of the terminal device. For example, the policy control function network element may send the wireless access assistance information to the home subscriber server by invoking a context management registration (Nudm_UEContextManagement_registration) service of the terminal device or by invoking a context management update (Nudm _UEContextManagement_update) service of the terminal device.

For another example, the policy control function network element sends the wireless access assistance information of the terminal device to a unified data repository (UDR) by invoking a data management create (Nudr_ DataManagementCreate) service or a data management update (Nudr_DataManagementUpdate) service; and the home subscriber server may obtain the subscription data of the terminal device from the UDR by invoking a data management query (Nudr_DataManagementQuery) service or a data management subscription (Nudr_DataManagementSubscribe) service. The subscription data may include wireless access assistance information of the terminal device. Alternatively, the policy control function network element may send the wireless access assistance information of the terminal device to the home subscriber server by invoking a subscription data management (Nudm _Subscriber DataManagement_Info) service of a unified data management network element in a second network.

With reference to the third aspect, in some implementations of the third aspect, that the home subscriber server in the first network sends the wireless access assistance information to a first access and management network element in a first network includes: The first access and management network element sends a UE location request (UE location request) message to the home subscriber server, where the message is used to report a location of the terminal device and obtain subscription data of the terminal device; and sending, by the home subscriber server, a UE location response (UE location response) message to the first access and management network element, where the response message includes the wireless access assistance information of the terminal device.

With reference to the third aspect, in some implementations of the third aspect, the wireless access information includes a radio access technology/frequency selection priority index RFSP index.

With reference to the third aspect, in some implementations of the third aspect, the wireless access information includes a subscriber profile ID SPID.

According to a fourth aspect, a communication method is provided, including: A policy control function network element in a second network determines wireless access assistance information of a terminal device, where the wireless access assistance information includes wireless access information corresponding to the terminal device and a matching condition corresponding to the wireless access information. The policy control function network element sends the wireless access assistance information to a second access and management network element in a second network, so that a first access and management network element in a first network obtains the wireless access assistance information via the second access and management network element, and determines, based on the wireless access assistance information, wireless access information that needs to be used by the terminal device. Alternatively, the policy control function network element sends the wireless access assistance information to a home subscriber server in a first network, so that a first access and management network element in the first network obtains the wireless access assistance information via the home subscriber server, and determines, based on the wireless access assistance information, wireless access information that needs to be used by the terminal device.

In a possible implementation, the first network may be a 4G network, the first access and management network element in the first network may be a mobility management entity in the 4G network, and the second network may be a mobile network of a different standard from the 4G network, for example, a 5G network, or a mobile network of a higher standard. The policy control function network element in the second network may be a policy control function network element PCF in the 5G network, or may be a combination of a policy and charging rules function (policy and charging rules function, PCRF) network element and a PCF network element in the 4G network.

According to the solution of this application, the policy control function network element in the second network determines the wireless access assistance information of the terminal device, and sends the wireless access assistance information to the second access and management network element in the second network or the home subscriber server in the first network, so that the first access and management network element in the first network obtains the wireless access assistance information via the second access and management network element, and determines, based on the wireless access assistance information, wireless access information that needs to be used by the terminal device. This avoids a problem that the first network fails to access the terminal device to the first network when there is no wireless access assistance information of the terminal device, so that the terminal device can camp on an appropriate mobile communication network, saving network resources, and improving user experience.

With reference to the fourth aspect, in some implementations of the fourth aspect, the wireless access assistance information includes at least one piece of wireless access information corresponding to the terminal device, the matching condition includes at least one matching condition respectively corresponding to the at least one piece of wireless information.

With reference to the fourth aspect, in some implementations of the fourth aspect, the matching condition corresponding to the wireless access information includes at least one of the following matching information: user type information corresponding to the terminal device, time information, location information of the terminal device, service type information used by the terminal device, and network load information.

With reference to the fourth aspect, in some implementations of the fourth aspect, that a policy control function network element in a second network determines wireless access assistance information of a terminal device includes: The policy control function network element determines the wireless access assistance information based on a data analysis result sent by a data analytics network element. The data analytics network element may be a network data analytics function (network data analytics function, NWDAF) network element, where the data analysis result may include at least one of the following information: UE service in use analytics (UE service in use analytics), service experience per RAT and/or per frequency analytics (service experience per RAT and/or per frequency analytics), data dispersion analytics (data dispersion analytics), user data congestion analytics (user data congestion analytics), and RAT/frequency usage analytics (RAT/frequency usage analytics).

With reference to the fourth aspect, in some implementations of the fourth aspect, that the policy control function network element sends the wireless access assistance information to a second access and management network element in a second network includes: The second access and management network element sends a request message to the policy control function network element, to obtain an access and mobility policy (AM policy) corresponding to the terminal device. The policy control function network element sends an access and mobility policy corresponding to the terminal device to the second access and management network element, where the access and mobility policy includes the wireless access assistance information of the terminal device.

With reference to the fourth aspect, in some implementations of the fourth aspect, that the policy control function network element sends the wireless access assistance information to a home subscriber server in a first network includes: The policy control function network element sends context information of the terminal device to the home subscriber server, where the context information includes the wireless access assistance information.

For example, the policy control function network element sends the wireless access assistance information to the home subscriber server by invoking a context management registration (Nudm_UEContextManagement_registration) service of the terminal device or by invoking a context management update (Nudm_UEContextManagement_update) service of the terminal device.

Alternatively, the policy control function network element sends subscription data of the terminal device to the home subscriber server, where the subscription data includes the wireless access assistance information of the terminal device.

For example, the policy control function network element may send the wireless access assistance information of the terminal device to a unified data repository (unified data repository, UDR) by invoking a data management create (Nudr_DataManagementCreate) service or a data management update service (Nudr_ DataManagementUpdate); and the home subscriber server may obtain the subscription data of the terminal device from the UDR by invoking a data management query (Nudr_DataManagementQuery) service or a data management subscription (Nudr_DataManagementSubscribe) service. The subscription data may include wireless access assistance information of the terminal device. For another example, the policy control function network element may send the wireless access assistance information to the home subscriber server by invoking a subscription data management (Nudm_Subscriber DataManagement_Info) service in the unified data management network element in the second network.

With reference to the fourth aspect, in some implementations of the fourth aspect, the wireless access information includes a radio access technology/frequency selection priority index (RFSP index).

With reference to the fourth aspect, in some implementations of the fourth aspect, the wireless access information includes a subscriber profile ID SPID.

According to a fifth aspect, a communication method is provided, including: A policy control function network element in a second network determines wireless access assistance information of a terminal device, where the wireless access assistance information includes wireless access information corresponding to the terminal device and a matching condition corresponding to the wireless access information. The policy control function network element sends the wireless access assistance information to a user plane gateway network element or a session gateway network element in a first network, so that a first access and management network element in the first network obtains the wireless access assistance information via the user plane gateway network element or the session gateway network element, and determines, based on the wireless access assistance information, wireless access information that needs to be used by the terminal device.

In a possible implementation, the first network may be a 4G network, and the first access and management network element in the first network may be a mobility management entity MME of the 4G network, and the first access and management network element in the first network may be an eNB in the 4G network. The user plane gateway network element may be a packet data network gateway (packet data network gateway, PGW) in the 4G network, and the session gateway network element may be a serving gateway (serving gateway, SGW) in the 4G network.

The second network may be a mobile network of a different standard from the 4G network, for example, a 5G network, or a mobile network of a higher standard. The policy control function network element may be a policy control function network element PCF in the 5G network, or may be a combination of a policy and charging rules function (policy and charging rules function, PCRF) network element and a PCF network element in the 4G network.

According to the solution of this application, the policy control function network element in the second network determines the wireless access assistance information of the terminal device, and sends the wireless access assistance information to the user plane gateway network element or the session gateway network element in the first network, so that the first access and management network element in the first network obtains the wireless access assistance information via the user plane gateway network element or the session gateway network element, and determines, based on the wireless access assistance information, the wireless access information be used by the terminal device. This avoids a problem that the first network fails to access the terminal device to the first network when there is no wireless access assistance information of the terminal device, so that the terminal device can camp on an appropriate mobile communication network, saving network resources, and improving user experience.

With reference to the fifth aspect, in some implementations of the fifth aspect, the wireless access assistance information includes at least one piece of wireless access information corresponding to the terminal device, the matching condition includes at least one matching condition respectively corresponding to the at least one piece of wireless information.

With reference to the fifth aspect, in some implementations of the fifth aspect, the matching condition corresponding to the wireless access information includes at least one of the following matching information: user type information corresponding to the terminal device, time information, location information of the terminal device, service type information used by the terminal device, and network load information.

With reference to the fifth aspect, in some implementations of the fifth aspect, that a policy control function network element in a second network determines wireless access assistance information of a terminal device includes: The policy control function network element determines the wireless access assistance information based on a data analysis result sent by a data analytics network element. The data analytics network element may be a network data analytics function (network data analytics function, NWDAF) network element, where the data analysis result may include at least one of the following information: UE service in use analytics (UE service in use analytics), service experience per RAT and/or per frequency analytics (service experience per RAT and/or per frequency analytics), data dispersion analytics (data dispersion analytics), user data congestion analytics (user data congestion analytics), and RAT/frequency usage analytics (RAT/frequency usage analytics).

For example, the policy control network element sends, via an IP-CAN session modification message, the wireless access assistance information of the terminal device to the user plane gateway network element. The user plane gateway network element sends, via an update bearer request (update bearer request) message, the wireless access assistance information of the terminal device to the session gateway network element. The session gateway network element sends, via an update bearer request (update bearer request) message, the wireless access assistance information of the terminal device to the first access management network.

With reference to the fifth aspect, in some implementations of the fifth aspect, the wireless access information includes a radio access technology/frequency selection priority index (RFSP index).

With reference to the fifth aspect, in some implementations of the fifth aspect, the wireless access information includes a subscriber profile ID SPID.

According to a sixth aspect, a communication apparatus is provided, including: a transceiver unit, where the transceiver unit is configured to receive wireless access assistance information from a second network, where the wireless access assistance information includes wireless access information corresponding to a terminal device and a matching condition corresponding to the wireless access information; and a processing unit, where the processing unit is configured to determine, based on the wireless access assistance information, wireless access information that needs to be used by the terminal device; and the transceiver unit is further configured to send, to an access network device in a first network, the wireless access information that needs to be used by the terminal device.

In a possible implementation, the first network may be a 4G network, the first access and management network element in the first network may be a mobility management entity MME in the 4G network, and the second network may be a mobile network of a different standard from the 4G network, for example, a 5G network, or a mobile network of a higher standard. An access network device in the first network may be an access network device eNB in the 4G network.

According to the communication apparatus provided in this application, a transceiver unit receives the wireless access assistance information from the second network, and the processing unit determines, the wireless access assistance information that needs to be used by the terminal device, and sends the wireless access assistance information that needs to be used to an access network device in the first network through the transceiver unit. This avoids a problem that the first access and management network element in the first network fails to access the terminal device to the first network when there is no wireless access assistance information of the terminal device, so that the terminal device can camp on an appropriate mobile communication network, saving network resources, and improving user experience.

With reference to the sixth aspect, in another implementation of the sixth aspect, the matching condition includes at least one of the following matching information:
user type information corresponding to the terminal device, time information, location information of the terminal device, service type information used by the terminal device, and network load information.

With reference to the sixth aspect, in another implementation of the sixth aspect, the transceiver unit is specifically configured to receive the wireless access assistance information of the terminal device that is sent by the second access and management network element in the second network.

With reference to the sixth aspect, in another implementation of the sixth aspect, the transceiver unit is specifically configured to receive, in a mobility management process of the terminal device, the wireless access assistance information of the terminal device that is sent by the second access and management network element.

With reference to the sixth aspect, in another implementation of the sixth aspect, the transceiver unit is specifically configured to receive the context information of the terminal device that is sent by the second access and management network element, where the context information of the terminal device includes the wireless access assistance information of the terminal device.

With reference to the sixth aspect, in another implementation of the sixth aspect, the transceiver unit is specifically configured to receive, via a home subscriber server in the first network, the wireless access assistance information sent by a unified data management function network element in the second network.

With reference to the sixth aspect, in another implementation of the sixth aspect, the transceiver unit is specifically configured to receive, via the home subscriber server, context information or subscription information of the terminal device that is sent by the unified data management function network element, where the context information or the subscription information includes the wireless access assistance information of the terminal device.

With reference to the sixth aspect, in another implementation of the sixth aspect, the wireless access assistance information includes at least one piece of wireless access information corresponding to the terminal device; and the matching condition includes at least one matching condition respectively corresponding to the at least one piece of wireless information. The processing unit is specifically configured to determine that the terminal device meets one or more of the at least one matching condition; and determine that wireless access information corresponding to the one or more matching conditions is wireless access information that needs to be used by the terminal device.

With reference to the sixth aspect, in another implementation of the sixth aspect, the one or more matching conditions include a matching condition corresponding to the first network, and the wireless access information that needs to be used by the terminal device is used to assist the terminal device in preferentially camping on the first network.

With reference to the sixth aspect, in another implementation of the sixth aspect, the matching condition corresponding to the first network includes a first time condition, and the wireless access information that needs to be used by the terminal device is used to assist the terminal device in preferentially camping on the first network under the first time condition. The matching condition corresponding to the first network may further include a first location condition, a first service type condition, a first network load condition, and the like.

With reference to the sixth aspect, in another implementation of the sixth aspect, the one or more matching conditions include the matching condition corresponding to a first frequency of the first network, and the wireless access information that needs to be used by the terminal device is used to assist the terminal device in preferentially camping on the first frequency.

With reference to the sixth aspect, in another implementation of the sixth aspect, the one or more matching conditions include a matching condition corresponding to the second network, and wireless access information that needs to be used by the terminal device is used to assist the terminal device to preferentially camp on the second network.

With reference to the sixth aspect, in another implementation of the sixth aspect, the matching condition corresponding to the second network includes a second time condition, and the wireless access information that needs to be used by the terminal device is used to assist the terminal device in preferentially camping on the second network under the second time condition. The matching condition corresponding to the second network may further include a second location condition, a second service type condition, a second network load condition, and the like.

With reference to the sixth aspect, in another implementation of the sixth aspect, the one or more matching conditions include the matching condition corresponding to a second frequency of the second network, and the wireless access information that needs to be used by the terminal device is used to assist the terminal device in preferentially camping on the second frequency.

With reference to the sixth aspect, in another implementation of the sixth aspect, the wireless access information includes a radio access technology RAT/frequency selection priority index.

With reference to the sixth aspect, in another implementation of the sixth aspect, where the wireless access information includes a subscriber profile ID SPID.

With reference to the sixth aspect, in another implementation of the sixth aspect, where the first network includes a 4th generation 4G network, and the second network includes a 5th generation 5G network.

According to a seventh aspect, a communication apparatus is provided, including: a transceiver unit, configured to obtain wireless access assistance information of a terminal device, where the wireless access assistance information includes wireless access information corresponding to the terminal device and a matching condition corresponding to the wireless access information, where the transceiver unit is further configured to send the wireless access assistance information to a first access and management network element in a first network, where the wireless access assistance information is used by the first access and management network element to determine wireless access information that needs to be used by the terminal device and send the wireless access information that needs to be used by the terminal device to an access network device in the first network.

In a possible implementation, the first network may be a 4G network, and the first access and management network element in the first network may be a mobility management entity MME of the 4G network, and the access network device in the first network may be an access network device eNB in the 4G network. The second network may be a mobile network of a different standard from the 4G network, for example, a 5G network, or a mobile network of a higher standard. A second access and management network element in the second network may be an access and mobility management function network element AMF in the 5G network.

According to the communication apparatus provided in this application, the transceiver unit sends the wireless access assistance information to the first access and management network element in the first network, so that the first access and management network element can determine, through the wireless access assistance information, the wireless access assistance information that needs to be used by the terminal device, and sends the wireless access assistance information that needs to be used to an access network device in the first network. This avoids a problem that the first access and management network element in the first network fails to access the terminal device to the first network when there is no wireless access assistance information of the terminal device, so that the terminal device can camp on an appropriate mobile communication network, saving network resources, and improving user experience.

With reference to the seventh aspect, in another implementation of the seventh aspect, the matching condition includes at least one of the following matching information:
user type information corresponding to the terminal device, time information, location information of the terminal device, service type information used by the terminal device, and network load information.

With reference to the seventh aspect, in another implementation of the seventh aspect, the transceiver unit is further configured to obtain wireless access assistance information of the terminal device from a policy control function network element; or obtain the wireless access assistance information of the terminal device from a unified data management center network element.

With reference to the seventh aspect, in another implementation of the seventh aspect, the transceiver unit is specifically configured to send, in a mobility management process of the terminal device, the wireless access assistance information to the first access and management network element.

With reference to the seventh aspect, in another implementation of the seventh aspect, the transceiver unit is specifically configured to send context information of the terminal device to the first access and management network element, where the context information includes wireless access assistance information of the terminal device.

With reference to the seventh aspect, in another implementation of the seventh aspect, the apparatus further includes a processing unit, configured to determine, based on the wireless access assistance information, wireless access information that needs to be used by the terminal device; and the transceiver unit is further configured to send, to the access network device in the second network, the wireless access information that needs to be used by the terminal device.

With reference to the seventh aspect, in another implementation of the seventh aspect, the wireless access assistance information includes at least one piece of wireless access information corresponding to the terminal device, and the matching condition includes at least one matching condition respectively corresponding to the at least one piece of wireless information. The processing unit is specifically configured to determine that the terminal device meets one or more of the at least one matching condition; and determine that wireless access information corresponding to the one or more matching conditions is the wireless access information that needs to be used by the terminal device.

With reference to the seventh aspect, in another implementation of the seventh aspect, the one or more matching conditions include the matching condition corresponding to the first network, and the wireless access information that needs to be used by the terminal device is used to assist the terminal device in preferentially camping on the first network.

With reference to the seventh aspect, in another implementation of the seventh aspect, the matching condition corresponding to the first network includes a first time condition, and the wireless access information that needs to be used by the terminal device is used to assist the terminal device in preferentially camping on the first network under the first time condition.

With reference to the seventh aspect, in another implementation of the seventh aspect, the one or more matching conditions include the matching condition corresponding to a first frequency of the first network, and the wireless access information that needs to be used by the terminal device is used to assist the terminal device in preferentially camping on the first frequency.

With reference to the seventh aspect, in another implementation of the seventh aspect, the one or more matching conditions include the matching condition corresponding to the second network, and the wireless access information that needs to be used by the terminal device is used to assist the terminal device in preferentially camping on the second network.

With reference to the seventh aspect, in another implementation of the seventh aspect, the matching condition corresponding to the second network includes a second time condition, and the wireless access information that needs to be used by the terminal device is used to assist the terminal device in preferentially camping on the second network under the second time condition.

With reference to the seventh aspect, in another implementation of the seventh aspect, the one or more matching conditions include the matching condition corresponding to a second frequency of the second network, and the wireless access information that needs to be used by the terminal device is used to assist the terminal device in preferentially camping on the second frequency.

With reference to the seventh aspect, in another implementation of the seventh aspect, the wireless access information includes a radio access technology RAT/frequency selection priority index.

With reference to the seventh aspect, in another implementation of the seventh aspect, the wireless access information includes a subscriber profile ID SPID.

With reference to the seventh aspect, in another implementation of the seventh aspect, the first network includes a 4th generation 4G network, and the second network includes a 5th generation 5G network.

According to an eighth aspect, a communication apparatus is provided, and the apparatus includes: a memory, configured to store a computer program; and a processor, configured to execute the computer program stored in the memory, so that the communication apparatus performs the communication method in any possible implementation of the first aspect, or the communication method in any possible implementation of the second aspect, or the communication method in any possible implementation of the third aspect, or the communication method in any possible implementation of the fourth aspect, or the communication method in any possible implementation of the fifth aspect.

According to a ninth aspect, a computer-readable storage medium is provided. The computer-readable storage medium stores a computer program, and when the computer program is run on a computer, the computer is enabled to perform the communication method in any possible implementation of the first aspect, the communication method in any possible implementation of the second aspect, the communication method in any possible implementation of the third aspect, the communication method in any possible implementation of the fourth aspect, or the communication method in any possible implementation of the fifth aspect.

According to a tenth aspect, a chip system is provided, including: a processor, configured to call a computer program from a memory and run the computer program, so that a communication device on which the chip system is mounted performs the communication method in any possible implementation of the first aspect, or the communication method in any possible implementation of the second aspect, or the communication method in any possible implementation of the third aspect, or the communication method in any possible implementation of the fourth aspect, or the communication method in any possible implementation of the fifth aspect.

### BRIEF DESCRIPTION OF DRAWINGS

FIG. 1 is a schematic diagram of an application scenario applicable to a method according to an embodiment of this application;
FIG. 2 is a schematic diagram of a network architecture for interaction between 5G and 4G according to this application;
FIG. 3 is a schematic flowchart of a communication method according to this application;
FIG. 4A and FIG. 4B are a schematic flowchart of a communication method according to this application;
FIG. 5A and FIG. 5B are a schematic flowchart of a communication method according to this application;
FIG. 6 is a schematic block diagram of an example of a communication apparatus according to this application;
FIG. 7 is a schematic block diagram of another example of a communication apparatus according to this application;
FIG. 8 is a schematic block diagram of another example of a communication apparatus according to this application;
FIG. 9 is a schematic block diagram of another example of a communication apparatus according to this application; and
FIG. 10 is a schematic block diagram of an example of a communication apparatus according to this application.

### DESCRIPTION OF EMBODIMENTS

The technical solutions in this application are described in the following with reference to the accompanying drawings.

The technical solutions in embodiments of this application may be applied to various communication systems, for example: long term evolution (long term evolution, LTE) system, LTE frequency division duplex (frequency division duplex, FDD) system, LTE time division duplex (time division duplex, TDD), worldwide interoperability for microwave access (worldwide interoperability for microwave access, WiMAX) communication system, 5th generation (5th generation, 5G) communication system or future communication system, for example, a 6th generation (6th generation, 6G) communication system, vehicle-to-x (vehicle-to-x, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), long term evolution-vehicle (long term evolution-vehicle, LTE-V) for workshop communication, internet of vehicles, machine type communication (machine type communication, MTC), internet of things (internet of Thingsthings, IoT), long term evolution-machine (long term evolution-machine, LTE-M), machine to machine (machine to machine M2M).

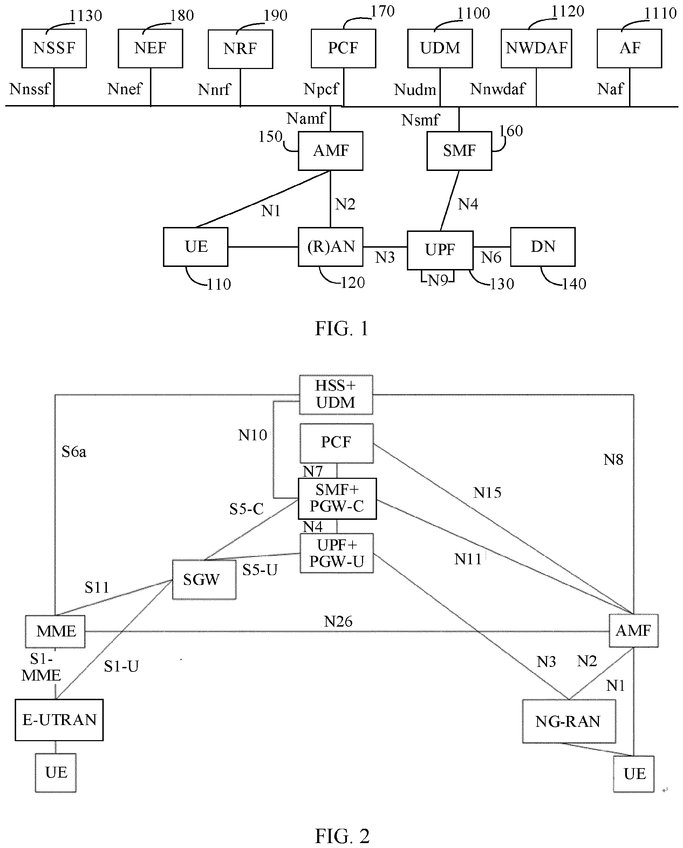

FIG. 1 is a schematic diagram of a network architecture applicable to a method according to an embodiment of this application. The network architecture may further include the following network elements:
1. User equipment (user equipment, UE) 110: It may include various handheld devices having a wireless communication function, a vehicle-mounted device, a wearable device, a computing device, or another processing device connected to a wireless modem, and various forms of terminals, mobile stations (mobile station, MS), terminals (terminal), or soft terminals, and the like. For example, water meters, electricity meters, and sensors.

For example, user equipment in embodiments of this application may be an access terminal, a user unit, a user station, a mobile station, a mobile console, a relay station, a remote station, a remote terminal, a mobile device, a user terminal (user terminal), a terminal equipment (terminal equipment), a wireless communication device, a user agent, or a user apparatus. The user equipment may also be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an vehicle-mounted device, a wearable device, a user equipment in a 5G network, or user equipment in a future evolved public land mobile network (public land mobile network, PLMN) or in future internet of vehicles, or the like, which is not limited in this embodiment of this application.

As an example rather than a limitation, in this embodiment of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data interaction, and cloud interaction. In a broad sense, the wearable intelligent device includes full-function, large-size, and complete or partial functions that can be implemented without relying on a smartphone, for example: a smart watch or smart glasses, and only focuses on a specific type of application function that needs to be used with smart phones and other devices, such as various smart bracelets and smart jewelries for physical sign monitoring.

In addition, in this embodiment of this application, the user equipment may alternatively be user equipment in an internet of things (internet of Thingsthings, IoT) system. The IoT is an important part of the future development of information technology. Its main technical feature is to connect an object to a network through communication technology, so as to achieve the intelligent network of man-machine interconnection and object interconnection. In this embodiment of this application, the IoT technology may implement massive connections, deep coverage, and terminal power saving through for example, a narrowband (narrow band, NB) technology. In addition, in this embodiment of this application, the user equipment may further include a sensor such as an intelligent printer, a train detector, and a gas station, and its main functions include collecting data (some user equipment), receiving control information and downlink data of an access network device, sending an electromagnetic wave, and transmitting uplink data to the access network device.

2. (Radio) access network (radio access network, (R)AN) 120: It is configured to provide a network access function for authorized user equipment in a specific area, and can use transmission tunnels of different quality based on the levels of user equipment, service requirements, and the like.

The (R)AN can manage radio resources, provide access services for user equipment, and forward control signals and user equipment data between user equipment and a core network. The (R)AN may also be understood as a base station in a conventional network.

For example, the access network device in this embodiment of this application may be any communication device that communicates with the user equipment and has a wireless receiving and sending function. The access network device includes but is not limited to: an evolved NodeB (eNB), a baseband unit (baseband unit, BBU), and an access point (access point, AP), a wireless relay node, a wireless backhaul node, a transmission point (transmission point, TP), or a transmission and reception point (transmission and reception point, TRP) in a wireless fidelity (wireless fidelity, Wi-Fi) system, or the like, it may be 5G, for example, NR, a gNB in a system, or a transmission point (TRP or TP), one or a group of antenna panels (including a plurality of antenna panels) of base stations in the 5G system, or it may be a network node that forms a gNB or a transmission point, for example, a baseband unit (BBU), a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of a radio resource control (radio resource control, RRC) and functions of a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU performs some physical layer processing functions, radio frequency processing, and functions related to active antennas. Information at the RRC layer is finally converted into information at the PHY layer, or is converted from information at the PHY layer. Therefore, in this architecture, it is considered that higher layer signaling such as RRC layer signaling may be sent by the DU, or may be sent by the DU and the AAU. It may be understood that the access network device may be a device including one or more of a CU node, a DU node, and an AAU node. In addition, the CU may be divided into an access network device in a radio access network (radio access network, RAN), or the CU may be divided into an access network device in a core network (core network, CN). This is not limited in this application.

3. User plane network element 130: It is used for packet routing and forwarding, processing of quality of service (quality of service, QoS) of user plane data, and the like.

In the 5G communication system, the user plane network element may be a user plane function (user plane function, UPF) network element. In the future communication system, the user plane network element may still be a UPF network element, or may have another name. This is not limited in this application.

4. Data network 140: It is a network used to provide data transmission.

In the 5G communication system, the data network may be a data network (data network, DN). In the future communication system, the data network may still be a DN, or may have another name. This is not limited in this application.

5. Access and management network element 150: It is mainly used for mobility management, access management, and the like, and may be used to implement other functions other than session management in a mobility management entity (mobility management entity, MME) function, for example, access authorization/authentication and other functions.

In the 5G communication system, the access and management network element may be an access and mobility management function (access and mobility management function, AMF) network element. In the future communication system, the access and management network element may still be an AMF network element, or may have another name. This is not limited in this application.

6. Session management network element 160: It is mainly used for session management, internet protocol (internet protocol, IP) address assignment and management of terminal devices, selection of termination points of manageable user plane functions, policy control and charging function interfaces, downlink data notification, and the like.

In the 5G communication system, the session management network element may be a session management function (session management function, SMF) network element. In the future communication system, the session management network element may still be an SMF network element, or may have another name. This is not limited in this application.

7. Policy control network element 170: It is a unified policy framework used to guide network behavior, and provides policy rule information or the like for a network element (for example, an AMF or an SMF network element) or a terminal device.

In the 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be a PCF network element, or may have another name. This is not limited in this application.

8. Network exposure network element 180: It is mainly used to support exposure of capabilities and events.

In the 5G communication system, the network exposure may be a network exposure function (network exposure function, NEF) network element. In the future communication system, the network exposure network element may still be an NEF network element, or may have another name. This is not limited in this application.

9. Network repository network element 190: It is used to maintain information about all network function services on the network.

In the 5G communication system, the network repository network element may be a network repository function (network repository function, NRF) network element. In the future communication system, the network repository network element may still be an NRF network element, or may have another name. This is not limited in this application.

10. Data management network element 1100: It is used for terminal device identification, access authentication, registration, mobility management, and the like.

In the 5G communication system, the data management network element may be a unified data management (unified data management, UDM) network element. In the future communication system, the unified data management may still be the UDM network element, or may have another name. This is not limited in this application.

11. Application network element 1110: It is used to route data affected by applications, access network exposure function network element, interact with the policy framework for policy control, and the like.

In the 5G communication system, the application network element may be an application function (application function, AF) network element. In the future communication system, the application network element may still be an AF network element, or may have another name. This is not limited in this application.

12. Data analytics network element 1120: It is used to implement a network data analysis function.

The data analytics network element may be an independent network element, or a combination of multiple network elements, or co-deploy with other network elements. For example, an NWDAF network element may be co-deployed with an AMF or a session management function (session management function, SMF) network element.

In the 5G communication system, the data analytics network element may be a network data analytics function (network data analytics function, NWDAF) network element. In the future communication system, the data analytics network element may still be an NWDAF network element, or may have another name. This is not limited in this application.

13. Network slice selection network element 1130: It is used to select a network slice instance that serves user equipment.

In the 5G communication system, the network slice selection network element may be a network slice selection function (network slice selection function, NSSF) network element. In the future communication system, the network slice selection function network element may still be an NSSF network element, or may have another name. This is not limited in this application.

It may be understood that the foregoing network element or function may be a network element in a hardware device, or a software function running on dedicated hardware, or a virtualization function instantiated on a platform (for example, a cloud platform).

For ease of description, this application is subsequently described by using an example in which the access management function network element is an AMF network element, the data analytics network element is an NWDAF network element, and the network storage network element is an NRF network element.

Further, the AMF network element is referred to as the AMF, the NWDAF network element is referred to as the NWDAF, and the NRF network element is referred to as the NRF. In other words, all AMFs described subsequently in this application may be replaced with an access management function network element, all NWDAFs may be replaced with a network data analytics function network element, and all NRFs may be replaced with a network repository network element.

For ease of description, in this application, an example in which the apparatus is an AMF entity, an NWDAF entity, or an NRF entity is used to describe a method for obtaining data. For an implementation method in which the apparatus is a chip in the AMF entity, a chip in the NWDAF entity, or a chip in the NRF entity, refer to specific descriptions in which the apparatus is separately an AMF entity, an NWDAF entity, and an NRF entity. Details are not described again.

In the network architecture shown in FIG. 1, a terminal device is connected to an AMF via an N1 interface, a RAN is connected to the AMF via an N2 interface, and the RAN is connected to a UPF via an N3 interface.

UPFs are connected to each other via an N9 interface, and the UPF is interconnected to the data network (data network, DN) via an N6 interface.

The SMF controls the UPF via the N4 interface.

The NSSF accesses the service-oriented architecture via the Nnssf interface to provide corresponding services; and similarly, the NRF, PCF, UDM, NWDAF, and AF accesses the service-oriented architecture via their corresponding interfaces to provide corresponding services.

Nnef, Nnrf, Npcf, Nudm, Nnwdaf, Naf, Namf, Nsmf, Nnssf, N1, N2, N3, and N4, N6 in FIG. 1 is the serial number of the interface. For meanings of these interface sequence numbers, refer to meanings defined in a 3rd generation partnership project (3rd generation partnership project, 3GPP) standard protocol. This is not limited herein.

It should be noted that names of network elements and communication interfaces between network elements in FIG. 1 are briefly described by using an example specified in a current protocol. However, this does not mean that embodiments of this application can be applied only to a currently known communication system. Therefore, a standard name that appears when a current protocol is used as an example for description is a functional description. A specific name of a network element, an interface, signaling, or the like is not limited in this application, and only indicates a function of the network element, the interface, or the signaling, and may be correspondingly extended to another system, such as a 2G, 3G, 4G, or future communication system.

In addition, it should be noted that, in some network architectures, network function network element entities such as an AMF network element, an SMF network element, a PCF network element, a BSF network element, and a UDM network element are all referred to as a network function (network function, NF) network element. Alternatively, in some other network architectures, a set of network elements such as an AMF network element, an SMF network element, a PCF network element, a BSF network element, and a UDM network element may be referred to as a control plane function network element.

FIG. 1 is a schematic diagram of a 5G network architecture based on a service-based interface. In this embodiment of this application, the NWDAF network element shown in FIG. 1 can obtain a data analysis result generated by a terminal device, for example, UE service in use analytics (UE service in use analytics), which is used to collect statistics about or predict a law of executing a service by the terminal device.

The following briefly describes interaction between 5G and 4G with reference to FIG. 2. FIG. 2 is a schematic diagram of a network architecture of interaction between 5G and 4G according to this application.

It can be seen from FIG. 2 that, the 5G network realizes the interaction between two networks by co-deploying with the 4G network (as shown in FIG. 2, the SMF is co-deployed with the PGW-C, and the UDM is co-deployed with the HSS) and/or enabling interactive interfaces (as shown in FIG. 2, the N26 interface is enabled between the AMF and MME).

Specifically, an evolved UMTS terrestrial radio access network (evolved UMTS terrestrial radio access network, E-UTRAN) shown in FIG. 2 is an access network device in a 4G network, an NG-RAN is an access network device in a 5G network, a home subscriber server (home subscriber server, HSS) is a server in the 4G network, configured to store user subscription information, a serving gateway (serving gateway, SGW) is a user plane access serving gateway in the 4G network, and a packet data network gateway control (packet data network gateway control, PGW-C) and a packet data network gateway user (packet data network gateway user, PGW-U) network element are network elements that are in the 4G network and that are responsible for connecting the user equipment to the external network, and further undertake session management and bearer control of the mobile phone, and IP address assignment, accounting support and other functions.

It should be noted that a name of each interface shown in FIG. 2 (for example, S1-MME, S1-U, S11, N26, N3, N1, N2, N11, S11, S5-U, S5-C, N15, N8, N10, and S6a shown in FIG. 2) is merely an example and does not constitute any limitation on the protection scope of this application.

The NWDAF network element has data collection, training, analysis, and inference functions, and may be configured to: collect related data from a network element, a third-party service server, a terminal device, or a network management system, and perform intelligent analysis training based on the related data, and provide a data analysis result to a network element, a third-party service server, a terminal device, or a network management system. The analysis result may assist the network in selecting service quality parameter of a service, or assist the network in executing traffic routing, or assist the network in selecting a background traffic transmission policy, or the like. This feature facilitates network maintenance and control, improves network resource utilization, and improves user experience.

The PCF or the PCRF is used to guide a unified policy framework for network behavior, and provide policy rule information or the like for a network element (such as an AMF or an SMF network element) or a terminal device. To implement interoperation between the 4G network and the 5G network, the PCF and the PCRF may also be co-deployed. For ease of description, in this embodiment of this application, the co-deployed network element may be represented as a PCF/PCRF.

Co-deployment of the UDM and the HSS (UDM/HSS) may provide at least one of the following functions for the terminal device: processing of 3GPP AKA authentication credential, user identification, access authorization, registration/mobility management, subscription management, short message management, and the like.

In this embodiment of this application, user equipment or access network device includes a hardware layer, an operating system layer running above the hardware layer, and an application layer running above the operating system layer. The hardware layer includes hardware such as a central processing unit (central processing unit, CPU), a memory management unit (memory management unit, MMU), a memory (also referred to as a main memory). The operating system may be any one or more type of computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, a specific structure of an execution body of a method provided in embodiments of this application is not specifically limited in embodiments of this application, provided that a program that records codes of the method provided in embodiments of this application can be run to perform communication according to the method provided in embodiments of this application. For example, the execution body of the method provided in embodiments of this application may be user equipment or an access network device, or a function module that can call and execute a program in user equipment or an access network device.

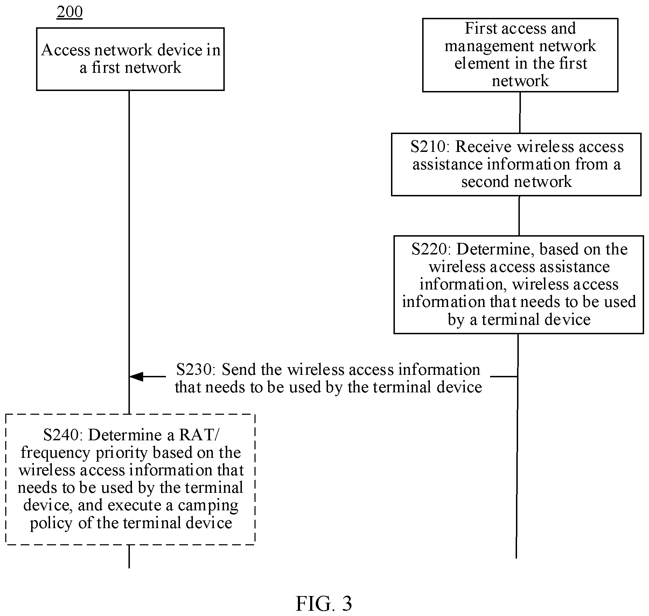

The following describes in detail a communication method provided in this application with reference to FIG. 3. The method may be applied to the scenario shown in FIG. 1, or certainly may be applied to another communication scenario. This is not limited in this embodiment of this application.

S210. A first access and management network element in a first network receives wireless access assistance information from a second network.

In embodiments of this application, the first network may be a 4G network, and a first access and management network element in the first network may be a mobility management entity (mobility management entity, MME) in the 4G network. The second network may be a 5G network, or the second network may further be a future communication system (for example, a 6G network).

The wireless access assistance information includes wireless access information corresponding to a terminal device and matching conditions corresponding to the wireless access information. The wireless access information corresponding to the terminal device may be represented by a RAT/frequency selection priority (RAT/frequency selection priority, RFSP) index (index), and different RFSP indexes can represent different wireless access information. Alternatively, the wireless access information may be represented by a subscriber profile ID (subscriber profile ID for RAT/frequency selection priority, SPID), and its function is similar to that of an RFSP index. Alternatively, the wireless access information may be also represented by a quality of service class identifier (quality of service class identifier, QCI) or a 5G QoS identifier (5G QoS identifier, 5QI), and different QCIs or 5QI values are used to represent different wireless access information. The wireless access information is used to assist terminal devices in accessing different RATs/frequency.

The matching condition corresponding to the wireless access information includes at least one of the following matching information.

User type information corresponding to the terminal device, for example, different user levels (gold, silver, and bronze users) and user categories (adults and teenagers).

Service type information used by the terminal device, for example, different service types such as an AR/VR service, a voice service, a video service, a data service, and a URLLC service.

Time information, for example, a specific time point, or daytime (for example, 8:00 to 18:00), evening, a busy hour (a time period), or an idle hour (a time period).

Location information of the terminal device, for example, any location information used to identify a network area, such as a tracking area (tracking area, TA), a tracking area list (TA list), a cell (cell), or a cell list (cell list).

Network load information, for example, a light load, a normal load, or a heavy load, where the network load herein may include an access network load, a core network load, a network slice load, and the like.

It should be understood that the wireless access assistance information includes at least one piece of wireless access information corresponding to the terminal device and at least one matching condition respectively corresponding to the at least one piece of wireless information. For example, wireless access assistance information corresponding to the terminal device # 1 is shown in Table 1. The wireless access assistance information includes a wireless access information RFSP index 1, an RFSP index 2, and an RFSP index 3 corresponding to the terminal device # 1, and they are corresponding to the matching condition 1, matching condition 2 and matching condition 3 respectively. The time information included in the matching condition 1 is a time period 1, for example, the time period may be at noon (12:00 to 13:00). Similarly, time information included in the matching condition 2 may be a time period 2, and the matching condition 3 includes time information (the time period 3) and service type information (a service type 1, for example, a voice service) used by the terminal device # 1.

**Table 1**

| Terminal device # 1 Identify information | Matching condition | Matching information | Wireless access information |
|---|---|---|---|
| UE ID 1 | Matching condition 1 | Time period 1 | RFSP index 1 |
| | Matching condition 2 | Time period 2 | RFSP index 2 |
| | Matching condition 3 | Time period 3 + service type 1 | RFSP index 3 |
| | ... | ... | ... |

Specifically, that a first access and management network element in a first network receives wireless access assistance information from a second network may be that the first access and management network element receives the wireless access assistance information from a second access and management network element in the second network, where the second access and management network element may be an access and mobility management function (access and mobility management function, AMF) network element in the 5G network, or may be a network element with a similar function in a future communication system. In a future communication system (for example, a 6G network), the second access and management network element may still be an AMF network element, or may have another name. This is not limited in this application. Alternatively, receiving, by the first access and management network element via a home subscriber server in a first network, the wireless access assistance information from the second network.

That a first access and management network element in a first network receives wireless access assistance information from a second network may be receiving the wireless access assistance information from the second network in a mobility management process of the terminal device, for example, a tracking area update (tracking area update, TAU) process of the terminal device, or a redirection process. For example, if the terminal device is in a connected state, in a procedure in which the terminal device is handed over from the 5G network to the 4G network, the first access and management network element receives the wireless access assistance information of the terminal device by receiving a handover request (handover request) message or a forward relocation request (forward relocation request) message sent by the second access and management network element in the second network. Alternatively, if the terminal device is in an idle state, when the terminal device moves from a 5G network to a 4G network, the first access and management network element sends a context request (UE context request) message to the second access and management network element, and receives the wireless access assistance information of the terminal device via a context response message (UE context response).

S220. The first access and management network element determines, based on the wireless access assistance information, wireless access information that needs to be used by a terminal device.

It should be noted that the wireless access information to be used is the wireless access information that is likely to be used by the terminal device. Subsequently, either the terminal device or the access network device may determine, based on an actual situation, whether to use the wireless access information. For example, the access network device may determine, based on a network load, a network signal coverage, and the like, whether to use the wireless access information. For another example, the terminal device may also determine, based on its energy consumption usage, service usage, and the like, whether to use the wireless access information.

Specifically, the first access and management network element may determine that the terminal device meets one or more matching conditions of the at least one matching condition, and the first access and management network element may determine that wireless access information corresponding to the one or more matching conditions is the wireless access information that needs to be used by the terminal device. When the at least one matching condition includes one matching condition, the first access and management network element determines that the terminal device meets the one matching condition, where the wireless access information corresponding to the one matching condition is wireless access information that needs to be used by the terminal device. For example, if the first access and management network element determines that the time information (the time period 1, an example of the first time condition) of the terminal device # 1 meets the matching condition 1, the first access and management network element determines that the wireless access information 1 corresponding to the matching condition 1 is the wireless access information that needs to be used by the terminal device # 1. For another example, if the first access and management network element determines that the time information (the time period 1) and the used service information (the voice service) of terminal device # 1 meets the matching condition 2, the first access and management network element determines that the wireless access information 2 corresponding to the matching condition 2 is the wireless access information that needs to be used by the terminal device # 1. It may be understood that there may be one or more wireless access information that needs to be used by the terminal device. This is not limited in this application.

It should be noted that when the terminal device meets the matching condition, it may also be understood as that the terminal device meets matching information included in the matching condition, or the terminal device meets a time condition (for example, a first time condition), a location condition, and the like in the matching condition that corresponds to the matching information.

S230. The first access and management network element sends the wireless access information that needs to be used by the terminal device to an access network device in the first network. Correspondingly, the access network device in the first network receives the wireless access information to be used.

Alternatively, before the first access and management network element sends the wireless access information that needs to be used by the terminal device, the first access and management network element may first determine that the wireless access information that needs to be used by the terminal device is different from the wireless access information of the terminal device in the current access network device, or the wireless access information that needs to be used by the terminal device that is sent last time. In this case, the first access and management network element sends the wireless access information that needs to be used to the access network device. In this way, repeated sending can be avoided, and signaling overheads can be reduced.

Specifically, that the first access and management network element sends wireless access information that needs to be used by the terminal device to the access network device may be that the first access and management network element sends context information of the terminal device to the access network device when the terminal device is in an idle state. The context information may include wireless access information that needs to be used by the terminal device.

Alternatively, in embodiments of this application, S240 may be further included. The access network device in the first network determines a corresponding RAT/frequency selection priority based on the wireless access information that needs to be used by the terminal device, and executes a camping policy of the terminal device based on the determined RAT/frequency selection priority.

Specifically, the access network device may determine a corresponding subscriber profile ID for RAT/frequency selection priority SPID based on the wireless access information that needs to be used by the terminal device. For example, if the wireless access information that needs to be used by the terminal device is represented as RFSP index in use= 1, the access network device sets the 5G 2.6 GHz frequency to the highest priority. For another example, if RFSP index in use=8, the access network device sets the 4G 800 MHz frequency to a highest priority.

The access network device executes a camping policy of a terminal device based on the determined RAT/frequency selection priority. The camping policy of the terminal device may be that the terminal device continues to camp on an original RAT/frequency, or that the terminal device accesses another RAT/frequency (target RAT/frequency). For example, if the access network device determines that a RAT/frequency with a highest priority is the current RAT/frequency, the access network device determines that the terminal device continues to camp on the current RAT/frequency. Alternatively, if the access network device determines that the priority of the target RAT/frequency is higher than the RAT/frequency where the terminal device camps on, the access network device determines that the terminal device connects to the target RAT/frequency.

According to the solution in embodiments of this application, the first access and management network element in the first network determines, by receiving the wireless access assistance information from the second network, the wireless access assistance information that needs to be used by the terminal device, and sends the wireless access assistance information that needs to be used to an access network device in the first network. This avoids a problem that the first access and management network element in the first network fails to access the terminal device to the first network when there is no wireless access assistance information of the terminal device, so that the terminal device can camp on an appropriate mobile communication network, saving network resources, and improving user experience.

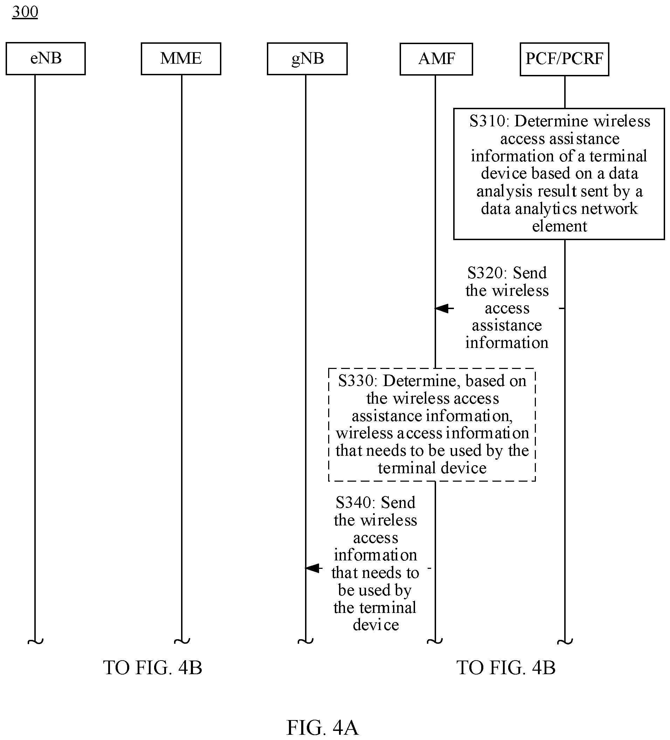

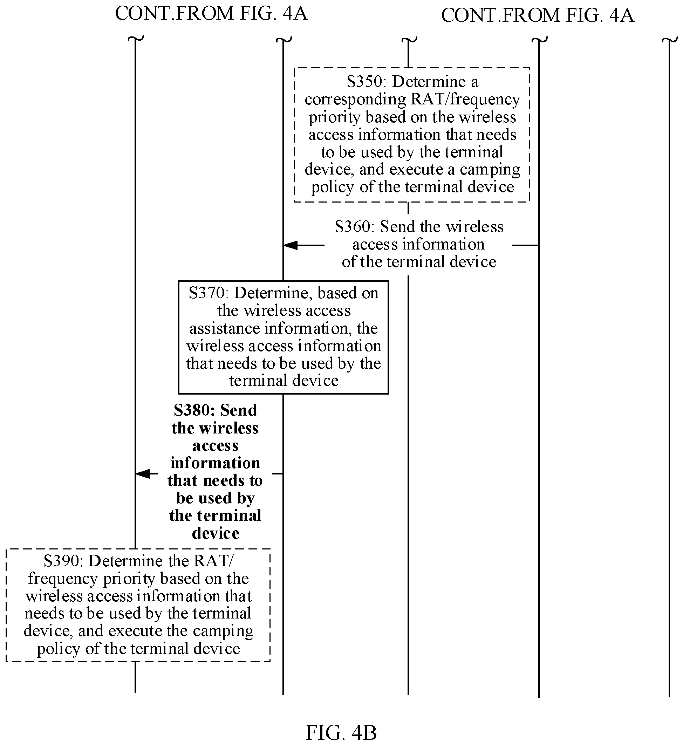

FIG. 4A and FIG. 4B are another example flowchart of a communication method according to an embodiment of this application. The communication method provided in this application is described in detail with reference to FIG. 4A and FIG. 4B. The sequence numbers of the following processes do not mean execution sequences. The execution sequence of the processes should be determined based on functions and internal logic of the processes, and should not be construed as any limitation on the implementation processes of embodiments of this application. In addition, it is possible that not all operations in the following method embodiments need to be performed.

Before S310, a policy control function (policy control function, PCF) in a second network receives a data analysis result, where the data analysis result may be generated by the data analytics network element, and used to assist the PCF in setting wireless access assistance information for the terminal device.

As an example rather than a limitation, the data analysis result may include one or more of the following information:
UE service in use analytics (UE service in use analytics): The information may be used to collect statistics about or predict service execution rules of a terminal device, and may include at least one service type, and information such as an initiation time, a location, a service data volume, an initiation probability, and a duration of each service.

Service experience per RAT and/or per frequency analytics (service experience per RAT and/or per frequency analytics): The information may be used to collect statistics on and predict service experience of each service in different RATs and/or frequencies. The information may include a service type, an RAT and/or a frequency, and service experience used by the terminal device.

Data dispersion analytics (data dispersion analytics): The information is used to collect statistics about or predict data traffic information of a single user or user group. The information may include a terminal device identifier or a terminal device group identifier, a region, a quantity of traffic, a data mobility classification, and the like.

User data congestion analytics (user data congestion analytics): The information is used to collect statistics about or predict a congestion status of user data in a region. The information may include a region, a data type (control plane or user plane), and a congestion degree (high, medium, and low).

RAT/frequency usage analytics (RAT/frequency usage analytics): The information is used to collect statistics about or predict usage of each RAT/frequency, and the information may include information such as a RAT and/or a frequency, a quantity of users, and traffic.

The foregoing data analysis results may be a terminal device granularity, a service granularity, or an area granularity, or may be a network granularity. For example, different terminal devices may correspond to different data analysis results, or different services such as a video service and a payment service of the terminal device may correspond to different data analysis results.

In a possible implementation, the PCF may receive the data analysis result actively sent by the NWDAF. For example, when the network slice load reaches a specific threshold, the NWDAF may actively send the data analysis result to the PCF. Alternatively, in another possible implementation, the PCF may further receive the data analysis result sent by the NWDAF at a request of the PCF. For example, the PCF may send an analysis subscription request message (Nnwdaf_analyticsSubscripiton_subscribe) to the NWDAF, where the message is used to request a data analysis result of the terminal device or the terminal device group. The NWDAF sends an analysis subscription notification message (Nnwdaf_analyticsSubscripiton_Notify), where the message includes the data analysis result of the terminal device. For another example, the PCF may further send an analysis subscription notification message (Nnwdaf_analyticsRequest) to the NWDAF, and the NWDAF sends an analytics response message (Nnwdaf_analyticsResponse), where the message may include a data analysis result of the terminal device.

The foregoing request message sent by the PCF to the NWDAF may indicate an ID of the terminal device or a group ID (group ID) of the terminal device that is to be analyzed. Alternatively, the PCF may further add the analytics filter (analytics filter) information to the request message. For example, area information is added to the request message to request a data analysis result of a terminal device in an area, or filter information such as a time period may be added.

S310. The PCF determines, based on a data analysis result sent by a data analytics network element, wireless access assistance information of a terminal device.

It should be understood that the wireless access assistance information may include the wireless access information corresponding to the terminal device and a matching condition corresponding to the wireless access information. The wireless access assistance information may include a plurality of wireless access information corresponding to the terminal device, and the matching condition may include a plurality of matching conditions. Each of the plurality of wireless access information corresponds to one of the plurality of matching conditions. Specific content of the wireless access assistance information is similar to that in S210, and details are not described herein again.

As an example rather than a limitation, in this application, the PCF may generate a RAT/frequency selection priority (RAT/Frequency Selection Priority, RFSP) index (index) value based on a data analysis result sent by the NWDAF, and use different RFSP indexes to indicate wireless access information of the terminal device under different matching conditions. A value range of the RFSP index may be 1 to 256. The value is sent to the access network device via the core network element, and a corresponding subscriber profile ID SPID is mapped by the access network device. For example, in a scenario, the highest NR selection priority corresponding to the RFSP index is mapped, indicating that the terminal device may preferentially select NR to camp on in this case. In another scenario, the highest E-UTRAN selection priority corresponding to the RFSP index is mapped, indicating that in this case, the terminal device may preferentially select an E-UTRAN to camp on. For another example, in a scenario, the access frequency of the terminal device correspondingly mapped from the RFSP index is 3.5 GHz, indicating that the terminal device may preferentially select the 3.5 GHz frequency to camp on in this case. In another scenario, if the RFSP index correspondingly maps the access frequency of the terminal device to 2.6 GHz, it indicates that in this case, the terminal device may preferentially select the 2.5 GHz frequency to camp on.

Specifically, for example, the data analysis result received by the PCF in step S310 includes UE service in use analytics (UE service in use analytics) and service experience per RAT and/or per frequency analytics (service experience per RAT and/or per frequency analytics), and the PCF may determine the RFSP index of the terminal device in two steps.

Step 1: The PCF determines, based on an analysis result of a service used by the terminal device, service types to be used by the terminal device in different scenarios. For example, for the terminal device # 1, the cell ID is 6010003, the start time of performing the voice service is 10:00, and the duration is 30 minutes. A probability that a terminal device executes a voice service at the time point within a statistics period is 0.8. In this case, the PCF determines, based on the used service analysis information, that the service type to be used by the terminal device # 1 in the cell 6010003 at 10:00 is the voice service. Similarly, the PCF determines, based on the used service analysis information, a service type to be used by the terminal device # 1 at another location or at another time point. For example, a probability that the terminal device uses a virtual reality (virtual reality, VR) service in a time period is the highest. Alternatively, the PCF may determine service types to be used by a group of terminal devices in different scenarios. The service type used by the terminal device may be a specific service type, or may be a number or indication information corresponding to the service type.

Step 2: Based on the service type obtained in step 1, the PCF determines optimal wireless access assistance information based on service experience per RAT and/or per frequency analytics (service experience per RAT and/or per frequency analytics). In other words, the wireless access information selected by the PCF based on the data analysis result sent by the NWDAF can optimize the service experience of the service type. For example, in a statistical period, the terminal device # 1 is in the cell 6010003 at 10:00 to 11:00: the probability of using the voice service is the highest, its service experience in 4G network is 3.0, and service experience in 5G network is 2.5. In this case, the PCF determines that RFSP index corresponds to a highest priority for accessing the 4G network. For another example, the probability that the terminal device # 1 uses the VR service is highest during 14:00 to 15:00, and its service experience in 5G network is 3.0, and service experience in 4G network is 2.0. In this case, the PCF determines that, when the terminal device #1 is in cell 6010003 during 14: 00 to 15:00, RFSP index corresponds to the highest priority of 5G network.

In addition to the foregoing two types of information, the PCF may further consider other information. For example, information such as a service priority of the terminal device, a user type of the terminal device, a user priority, and a network congestion status. For example, the PCF determines, based on the analysis result of the service used by the terminal device of the terminal device # 1, that a probability of a video service and a voice service occurring on the terminal device # 1 is the same in a specific scenario, but a priority of the video service is higher than that of the voice service. In this case, the PCF may select, based on the service experience analysis result of the video service, a RAT/frequency that can provide the best experience of the video service. For another example, the PCF determines, based on the foregoing two data analysis results, that the radio access technology of the terminal device # 1 is RAT #1 (for example, NR), but network load of RAT #1 is already high, and a user priority of the terminal device # 1 is low. In this case, the PCF may determine to select the RAT#2 (for example, E-UTRAN) for the terminal device # 1.

That is, the wireless access assistance information determined by the PCF includes a plurality of pieces of wireless access information corresponding to the terminal device under a plurality of matching conditions. Alternatively, it may also be understood that the wireless access information that is corresponding to the terminal device and included in the wireless access assistance information changes with information such as time information and location information of the terminal device. Subsequently, the wireless access assistance information may be used by the AMF determine wireless access information that needs to be used by the terminal device based on the actual situation (time information, location information of the terminal device, or the like). For example, different service types used by the terminal device correspond to different wireless access information, or the terminal device in different network area corresponds to different network load statuses, different local policies may correspond to different wireless access information. For another example, if the load of 5G high frequency is high, but the load of 5G core network is low, the PCF may determine that the wireless access information of the terminal device corresponds to the 5G low frequency. Alternatively, if the load of entire 5G network is relatively high, the PCF may determine that the wireless access information of the terminal corresponds to the 4G network.

It should be understood that the wireless access assistance information generated by the PCF may be a granularity of a single terminal device, or may be a granularity of a terminal device group. When the wireless access assistance information is the granularity of terminal device group, the wireless access assistance information is applied to each terminal device in the group, for example, the terminal device group may be a gold user group, or a terminal device group in an area of interest.

S320. The PCF sends the wireless access assistance information of the terminal device to the AMF (an example of a second access and management network element). Correspondingly, the AMF receives the wireless access assistance information.

As an example rather than a limitation, in a possible implementation, this step may occur in a 5G registration process of the terminal device. The AMF receives the registration message of the terminal device, and sends a request message to the PCF, to obtain a corresponding access and mobility policy (AM policy). The PCF sends, at the request of the AMF, a corresponding access and mobility policy, where the wireless access assistance information of the terminal device is included.

In another possible implementation, this step may occur in a process where the PCF actively updates an access and mobility policy, and the PCF actively sends an updated access and mobility policy to the AMF, including the wireless access assistance information of the terminal device. For example, when a local policy of an operator configured in the PCF changes, the PCF is triggered to update an access and mobility policy, where the access and mobility policy includes the wireless access assistance information of the terminal device. For another example, when the PCF detects that the subscription data of the terminal device changes, or when the data analysis result sent by the NWDAF changes, the PCF may be triggered to actively update the access and mobility policy, and send wireless access assistance information of the terminal device to the AMF.

Alternatively, the method may further include S330. The AMF determines, based on the wireless access assistance information, wireless access information that needs to be used by the terminal device.

It should be understood that the wireless access information to be used is wireless access information that is likely to be used by the terminal device. Subsequently, either the terminal device or the access network device may determine, based on an actual situation, whether to use the wireless access information. For example, the access network device may determine, based on a network load, a network signal coverage, and the like, whether to use the wireless access information. For another example, the terminal device may also determine, based on its energy consumption usage, service usage, and the like, whether to use the wireless access information.

In a possible implementation, the wireless access information that needs to be used by the terminal device may be represented by RFSP index in use (RFSP index in use) information of the terminal device. For ease of understanding and description, the wireless access information that needs to be used by the terminal device is RFSP index in use information is used as an example for description.

Alternatively, the AMF may further obtain the subscribed RFSP index information of the terminal device from the UDM, and determine the RFSP index in use information of the terminal device with reference to the subscribed RFSP index information, a local policy, and the like.

Specifically, the AMF may determine, based on a matching condition met by the terminal device, the wireless access information corresponding to the matching condition as the wireless access information that needs to be used by the terminal device. For example, when the AMF determines that the matching information such as the network location where the terminal device # 1 is located, the type of service being or to be executed by the terminal device, and a load status of a current network meet the matching condition 1 in the wireless access assistance information, where the wireless access information corresponding to the matching condition 1 is that the RFSP index is equal to 8. In this case, the AMF determines that wireless access information that needs to be used by the terminal device is that the RFSP index in use is equal to 8. For another example, when the AMF determines that the network location where the terminal device # 1 is located or the type of a service being or to be executed by the terminal device changes, for example, the terminal device moves from the cell # 1 to the cell # 1, or the service type used by the terminal device changes from a voice service to a video service, the AMF determines that the terminal device meets a matching condition 2 in the wireless access assistance information, where wireless access information corresponding to the matching condition 2 is that an RFSP index is equal to 7. In this case, the AMF may determine that wireless access information that needs to be used by the terminal device is that the RFSP index in use is equal to 7.

Alternatively, the method may further include S340. The AMF sends the wireless access network information that needs to be used by the terminal device to the gNB (an example of an access network device in the second network). Correspondingly, the access network device receives the wireless access information that needs to be used by the terminal device.

Before the AMF sends the wireless access information that needs to be used by the terminal device, the AMF may determine a matching condition currently met by the terminal device. For example: if the AMF determines the matching condition currently met by the network location where the terminal device #1 is located, type of service being executed, and a load status of the 5G network is that the wireless access information RFSP index is equal to 8, the AMF determines that wireless access information that needs to be used by the terminal device # 1 is that the RFSP index in use is equal to 8, and sends the wireless access information to be used (RFSP index in use is equal to 8) to the access network device. It should be understood that, when the matching condition met by the terminal device # 1 changes, the wireless access assistance information corresponding to the terminal device # 1 also changes, and the wireless access information that is sent by the AMF to the access network device and that is to be used by the terminal device # 1 also changes accordingly.

Alternatively, before the AMF sends the information, the AMF may further determine whether the RFSP index in use information is the same as RFSP index in use information currently in the access network device for the terminal device. Alternatively, the AMF determines whether the RFSP index in use information of the terminal device is the same as the RFSP index in use information of the terminal device that is sent previously. If the RFSP index in use information is different, the AMF sends the RFSP index in use information to the access network device. In this way, the AMF can be prevented from repeatedly sending the same RFSP index in use information, and signaling overheads are reduced.

Specifically, that the AMF sends the RFSP index in use information of the terminal device to the access network device may be in a process in which the AMF performs signaling interworking with the access network device. For example, when a terminal device enters a connected state from an idle mode, a signaling connection of an N2 interface is created between the access network device and the AMF. In this case, the AMF sends initial context setup (NG-AP initial UE context setup) message of the terminal device to the access network device. The message is used to set up, on the access network device, an overall initial context necessary for the terminal device, and the AMF may send the RFSP index in use information to the access network device via the message. For another example, the terminal device is in a connected state, and an N2 interface connection has been established. In this case, if the AMF needs to update the N2 interface connection, the AMF may send a terminal device context modification (NG-AP UE context modification) message to the access network device. The AMF sends the RFSP index in use information to the access network device via the message.

Alternatively, the method may further include S350. The access network device determines, based on the wireless access information that needs to be used by the terminal device, a corresponding RAT/frequency selection priority, and executes a camping policy of the terminal device based on the determined RAT/frequency selection priority.

Specifically, the access network device may determine a corresponding RAT/frequency selection priority subscriber profile ID (subscriber profile ID, SPID) based on the RFSP index in use information. For example, if the RFSP index in use is equal to 1, the gNB sets the 5G 2.6 GHz frequency to the highest priority. For another example, if the RFSP index in use is equal to 8, the access network device sets the 4G 800 MHz frequency to the highest priority.

The access network device executes a camping policy of the terminal device based on the determined RAT/frequency selection priority. Specifically, the camping policy of the terminal device may be that the terminal device continues to camp on an original RAT/frequency, or the terminal device accesses another RAT/frequency (the target RAT/frequency). For example, if the access network device determines, based on the RFSP index in use sent by the AMF, that a RAT/frequency with a highest priority is the current RAT/frequency, the access network device determines that the terminal device continues to camp on the current RAT/frequency. Alternatively, if the access network device determines, based on the RFSP index in use information sent by the AMF, that a priority of the target RAT/frequency is higher than the RAT/frequency on which the terminal device currently camps, the access network device determines that the terminal device accesses the target RAT/frequency.

The access network device enables the terminal device to access the target RAT/frequency. In a possible implementation, the terminal device is in a connected state, and the gNB determines that a priority of the target RAT/frequency is higher than that of the current RAT/frequency. In this case, the access network device triggers a handover (Handover) procedure of the terminal device. The target RAT/frequency information is carried in a handover measurement message or a handover command sent by the access network device to the terminal device. Alternatively, the access network device triggers a redirection (Redirection) procedure of the terminal device, and the target RAT/frequency information is carried in radio resource control (radio resource control, RRC) connection release (RRC connection release) message sent by the access network device to the terminal device. The access network device hands over or redirects the terminal device to the target RAT/frequency. Alternatively, the access network device may add information about handover or redirection of the terminal device to the target RAT/frequency in a subsequent handover or redirection procedure triggered by the terminal device based on another reason.

In another possible implementation, if the terminal device is in an idle state, the access network device may wait for the terminal device to enter a connected state, and perform the foregoing same method. Alternatively, the access network device actively pages the terminal device to a connected mode, and performs a same method as the foregoing terminal device in a connected mode.

S360. The AMF sends the wireless access assistance information of the terminal device to the MME (an example of a first access and management network element in a first network). Correspondingly, the MME receives the wireless access assistance information.

Specifically, the AMF may send, in a mobility management process of the terminal device, the wireless access assistance information of the terminal device to the MME. If the terminal device is in the connected state, the AMF may, in a process in which the terminal device is handed over from the 5G network to the 4G network, send the wireless access assistance information of the terminal device to the MME via signaling interworking between the AMF and the MME. For example, the AMF sends the wireless access assistance information of the terminal device to the MME via a handover request (handover request) message or a forward relocation request (forward relocation request) message.

If the terminal device is in an idle state, when the terminal device moves from a 5G network to a 4G network, sending, by the MME, a context request (UE context request) message to the AMF. The AMF may send the wireless access assistance information of the terminal device to the MME via a context response message (UE context response).

The foregoing mobility management process of the terminal device may be caused by step S340b where the terminal device is triggered to access the target RAT/frequency, or may be caused by another reason, for example, handover or redirection caused by a weak signal of the 5G network. This is not limited in this application.

According to the solution of this application, the AMF sends the wireless access assistance information of the terminal device to the MME, and the MME may determine, based on a specific scenario and an environment, wireless access information that needs to be used by the terminal device, so as to properly use a network resource and improve user experience. For example, if the MME determines, based on the obtained wireless access assistance information, that the current RAT with the highest priority corresponding to the terminal device is the 4G network, a "ping-pong" problem that occurs when a 5G terminal device is handed over to a 4G network because MME preferentially accesses the 5G network by default in the conventional technology is temporarily avoided. For another example, subsequently, when location information of the terminal device, service type information used by the terminal device changes, the MME may further trigger, provided that the terminal device meets a matching condition in which the RAT is 5G, a mobility management process of the terminal device from the 4G network to the 5G network, so as to make user experience optimal.

S370. The MME determines, based on the wireless access assistance information of the terminal device, wireless access information that needs to be used by the terminal device.

It should be understood that, similar to that in S220, the wireless access information to be used is wireless access information that may be used by the terminal device. Subsequently, the terminal device or the access network device may determine, based on an actual situation, whether to use the wireless access information.

Alternatively, that the MME determines, based on the wireless access assistance information, wireless access information that needs to be used by the terminal device may be determining, based on the wireless access assistance information obtained from the AMF, the wireless access information that is subscribed to by the terminal device in 4G and that is obtained from the HSS, and the local policy, the wireless access information that the terminal device determines to use.

As an example rather than a limitation, the MME may determine that matching information such as location information of the 4G network where the terminal device is located, the type of a service being or to be executed by the terminal device, and current 4G network load, meets a matching condition. The MME determines that the wireless access information corresponding to the matching condition is the wireless access information that needs to be used by the terminal device. For example, the MME determines that a current moment, a current location (TA) of the terminal device, or a current 4G network load status meets a matching condition in wireless access assistance information, where wireless access information corresponding to the matching condition is that an RFSP index is equal to 8 (which corresponds to the 4G RAT/frequency selection priority). In other words, the MME determines that the current RFSP index in use of the terminal device is equal to 8. Subsequently, the MME sends the RFSP index in use information to an access network device (for example, an eNB) in the first network, to ensure that the terminal device can camp on the 4G network in this scenario. This avoids a "ping-pong" problem that the terminal device performs between the 5G network and the 4G network because the terminal device in the 5G network always preferentially accesses the 5G network, thereby improving user experience and saving network resources.

S380. The MME sends the wireless access information that needs to be used by the terminal device to the eNB (an example of an access network device in the first network). Correspondingly, the access network device receives the wireless access information that needs to be used by the terminal device.

Before the MME sends the wireless access information that needs to be used by the terminal device, the MME may determine a matching condition currently met by the terminal device. For example, if it determines the matching condition currently met by the network location where the terminal device #1 is located, type of service being executed, and a load status of the 4G network is that the wireless access information RFSP index is equal to 2, the MME determines that the wireless access information that needs to be used by the terminal device # 1 is that the RFSP index in use is equal to 2, and sends the wireless access information to be used (the RFSP index in use is equal to 2) to the access network device. It should be understood that, when the matching condition met by the terminal device # 1 changes, the wireless access assistance information corresponding to the terminal device # 1 also changes, and the wireless access information that is sent by the MME to the access network device and that is to be used by the terminal device # 1 also changes accordingly.

Alternatively, before the MME sends the wireless access information that needs to be used by the terminal device, the MME may first determine that the wireless access information that needs to be used by the terminal device is different from the wireless access information of the terminal device in the current access network device, or the wireless access information that needs to be used by the terminal device that is sent last time. In this case, the MME sends the wireless access information that needs to be used to the access network device. In this way, repeated sending can be avoided, and signaling overheads can be reduced.

Specifically, that the MME sends the RFSP index in use information of the terminal device to the access network device may be that the MME sends an initial context setup (S1-AP initial UE context setup) message of the terminal device to the eNB when the terminal device is in an idle state. The initial context setup message may include the RFSP index in use information. Alternatively, when the terminal device is in a connected state, sending, by the MME, a context modification (S1-AP UE context modification) message of the terminal device to the eNB, where the context modification message may include the RFSP index in use information.

In the solution of this embodiment of this application, sending, via the second access and management network element (for example, an AMF) in the second network, the wireless access assistance information of the terminal device to the first access and management network element (for example, an MME) in the first network, so that the first access and management network element can determine, through the wireless access assistance information, the wireless access assistance information that needs to be used by the terminal device, and send the wireless access assistance information to be used to an access network device of the first network. This avoids a problem that the first access and management network element in the first network fails to access the terminal device to the first network when there is no wireless access assistance information of the terminal device, so that the terminal device can camp on an appropriate mobile communication network, saving network resources, and improving user experience.

Alternatively, the method may further include S390. The access network device in the first network determines a RAT/frequency selection priority based on the wireless access information that is sent by the MME and needs to be used by the terminal device, and executes a camping policy of the terminal device. The specific methods and procedures are similar to those in S240, and details are not described herein again.

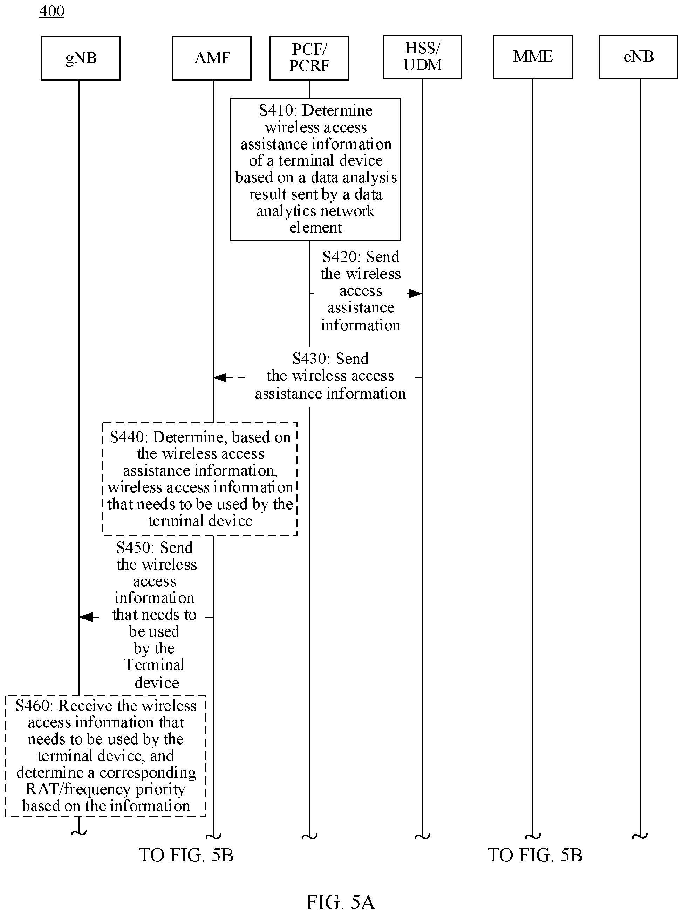

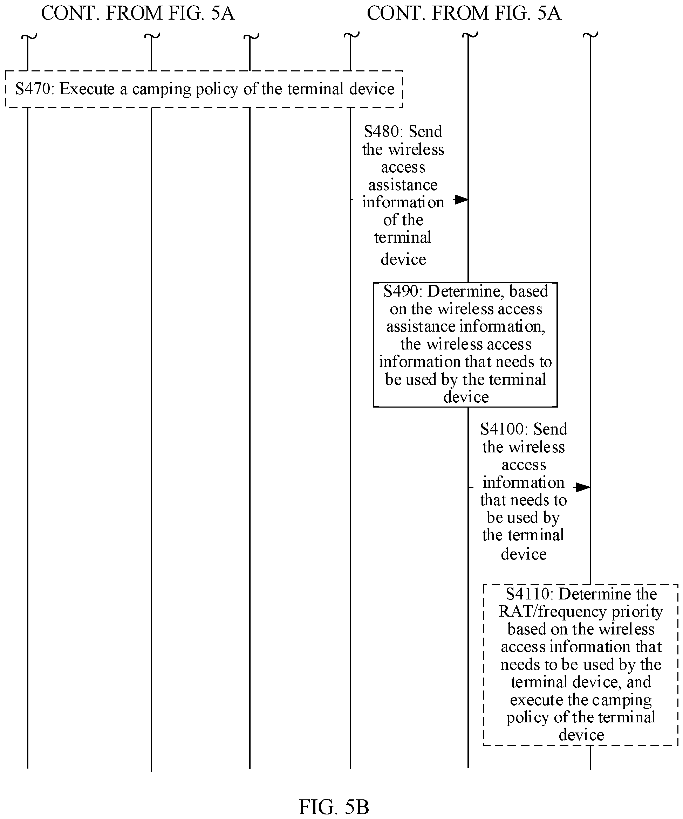

FIG. 5A and FIG. 5B are another example flowchart of a communication method according to an embodiment of this application. The communication method provided in this application is described in detail with reference to FIG. 5A and FIG. 5B. The sequence numbers of the following processes do not mean execution sequences. The execution sequence of the processes should be determined based on functions and internal logic of the processes, and should not be construed as any limitation on the implementation processes of embodiments of this application. In addition, it is possible that not all operations in the following method embodiments need to be performed.

Before S410, a policy control function (policy control function, PCF) in the second network receives a data analysis result, where the data analysis result may be generated by the data analytics network element, and used to assist the PCF in setting wireless access assistance information for the terminal device.

Information included in the data analysis result and signaling interworking through which the PCF receives the data analysis result are similar to steps before S310, and details are not described herein again.

S410. The PCF determines wireless access assistance information of a terminal device based on a data analysis result. This step and information included in the wireless access assistance information are similar to those in S310.

It should be noted that alternatively, before S410 and in S410, the UDM may further receive the data analysis result sent by the NWDAF, and determine the wireless access assistance information of the terminal device based on the data analysis result. In other words, before S410 and in S410, the UDM may alternatively perform the same or similar function of determining the wireless access assistance information of the terminal device by the PCF in embodiments of this application. Alternatively, in embodiments of this application, the access assistance information may be determined by NWDAF itself. This is not limited in this application.

S420. The PCF sends the wireless access assistance information of the terminal device to a home subscriber server in the first network. Correspondingly, the home subscriber server in a first network receives the wireless access assistance information.

It may be understood that the home subscriber server in the first network may be an HSS in the 4G network. In addition, in order to implement interoperability of 4G network and 5G network, the HSS and the UDM may be co-deployed. For ease of description, the value is represented by HSS/UDM. That is, the home subscriber server HSS in the first network receives, via the UDM, the wireless access assistance information of the terminal device that is sent by the PCF.

In a possible implementation, the PCF may send context information of the terminal device to the UDM/HSS, where the context information includes the wireless access assistance information. For example, the PCF may send the information to the UDM/HSS by invoking a context management registration (Nudm_UEContextManagement_registration) service of the terminal device, or by invoking a context management update (Nudm_UEContextManagement_update) service of the terminal device.

In another possible implementation, the PCF may send subscription data of the terminal device to the UDM/HSS, where the subscription data includes the wireless access assistance information of the terminal device. For example, the PCF may send the wireless access assistance information of the terminal device to a unified data repository (unified data repository, UDR) by invoking a data management creation (Nudr_DataManagementCreate) service or a data management update (Nudr_DataManagementUpdate) service. Then, the UDM/HSS obtains the wireless access assistance information from the UDR. For example, the UDM/HSS may obtain the subscription data of the terminal device from the UDR by invoking a data management query (Nudr_DataManagementQuery) service or a data management subscription (Nudr_ DataManagementSubscribe) service. The subscription data may include the wireless access assistance information of the terminal device. The PCF may further send the wireless access assistance information to the UDM/HSS by invoking a subscription data management service (Nudm_Subscriber DataManagement_Info) of the UDM.

Alternatively, the method may further include S430. The UDM/HSS sends the wireless access assistance information to the AMF (an example of a second access and management network element in a second network). Corresponding, the AMF receives the wireless access assistance information.

In a possible implementation, when the terminal device accesses the 5G network to initiate a registration procedure or a location update procedure, the AMF sends a context registration request message (Nudm_UECM _Registration request) of the terminal device or a context acquisition request message (Nudm_UECM_Get request) of the terminal device to the UDM. The UDM may send the wireless access assistance information to the AMF via a context registration response (Nudm_UECM_Registration response) message of the terminal device or a context acquisition response (Nudm_UECM_Get response) message of the terminal device. It should be understood that, in this case, a procedure in which the UDM sends, to the AMF, the subscribed wireless access information of the terminal device, may not be affected. In other words, the UDM sends, to the AMF, the subscribed wireless access information of the terminal device and the wireless access assistance information determined by the PCF.

In another possible implementation, the AMF sends a subscription data request (Nudm_SDM_get request) message or a subscription request (Nudm_SDM_Subscribe request) message to the UDM, used to obtain subscription data of the terminal device in a 5G network. The UDM may send the wireless access assistance information to the AMF via a subscription data response message (Nudm_SDM_get response) or a subscription response message (Nudm_SDM_Subscribe response). Alternatively, in this manner, the UDM may update the originally subscribed wireless access information of the terminal device to the wireless access assistance information determined by the PCF.

Alternatively, the method may further include S440. The AMF determines, based on the wireless access assistance information, wireless access information that needs to be used by the terminal device.

Alternatively, the method may further include S450. The AMF sends the wireless access information to be used to the gNB (an example of an access network device in the second network). Correspondingly, the access network device receives the wireless access information to be used.

Alternatively, the method may further include S460 and S470. The access network device determines, based on the wireless access information that needs to be used by the terminal device, a RAT/frequency selection priority, and executes a camping policy of the terminal device.

The foregoing steps are similar to those in S330, S340, and S350, and details are not described herein again.

S480. The UDM/HSS sends the wireless access assistance information of the terminal device to an MME (an example of a first access and management network element in a first network). Correspondingly, the MME receives the wireless access assistance information.

Specifically, when the terminal device accesses the 4G network to initiate a registration procedure or a TAU procedure, the MME sends a UE location request (UE location request) message to the HSS. The message is used to report a location of the terminal device and obtain information such as subscription data of the terminal device in the 4G network. The HSS may send the wireless access assistance information to the MME via a UE location response (UE location response) message.

S490. The MME determines, based on the wireless access assistance information, wireless access information that needs to be used by the terminal device.

S4100: The MME sends the wireless access information that needs to be used by the terminal device to an access network device (for example, an eNB) in the first network. Correspondingly, the access network device receives the wireless access information that needs to be used by the terminal device.

Alternatively, the method may further include S4110. The access network device determines, based on the wireless access information that needs to be used by the terminal device, a RAT/frequency selection priority, and executes a camping policy of the terminal device.

A specific execution process of S490 to S4110 is similar to that of S370 to S390, and details are not described herein again.

It should be understood that, in this application, the PCF may alternatively send the wireless access assistance information of the terminal device to the MME in another manner. For example, if the PCF and the PCRF are co-deployed, the PCF/PCRF may alternatively send the wireless access assistance information of the terminal device to the MME in the 4G network via the PGW and the SGW. A specific sending manner is not limited in this application. For example, the PCF/PCRF sends the wireless access assistance information (such as the RFSP index and the corresponding matching condition) of the UE to the PGW via an IP-CAN session modification message. The PGW sends the wireless access assistance information of the UE to the SGW via an update bearer request (update bearer request) message. The SGW sends the wireless access assistance information of the UE to the MME via an update bearer request (update bearer request) message.

It should be understood that sequence numbers of the processes do not mean an execution sequence in the foregoing embodiments. The execution sequence of the processes should be determined based on functions and internal logic of the processes, and should not be construed as any limitation on the implementation processes of embodiments of this application.

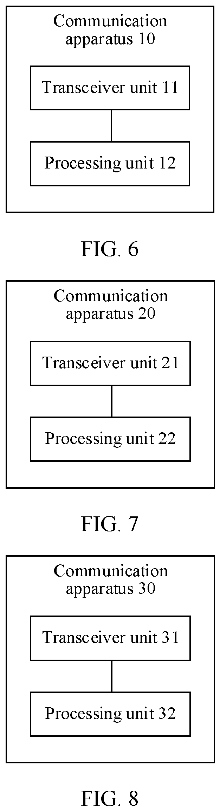

The methods provided in embodiments of this application are described in detail above with reference to FIG. 3, FIG. 5A, and FIG. 5B. The apparatus provided in embodiments of this application is described in detail below with reference to FIG. 6 to FIG. 10.

FIG. 6 is a schematic block diagram of a communication apparatus according to an embodiment of this application. As shown in FIG. 6, the communication apparatus 10 may include a processing unit 11 and a transceiver unit 12.

In a possible design, the communication apparatus 10 may correspond to a first access and management network element in a first network in the foregoing method embodiment. For example, it may be an MME in the 4G network, or a chip configured in the first access and management network element.

It should be understood that the communication apparatus 10 may correspond to the first access and management network element in the method 200, 300, and 400 according to embodiments of this application. The communication apparatus 10 may include units configured to perform the methods performed by the first access and management network element in the method 200 in FIG. 3, the method 300 in FIG. 4A and FIG. 4B, and the method 400 in FIG. 5A and FIG. 5B. In addition, the units in the communication apparatus 1500 and the foregoing other operations and/or functions are respectively used to implement corresponding procedures of the method 200 in FIG. 3, the method 300 in FIG. 4A and FIG. 4B, and the method 400 in FIG. 5A and FIG. 5B.

When the communication apparatus 10 is configured to perform the method 200 in FIG. 3, the processing unit 11 may be configured to perform S220 in the method 200, and the transceiver unit 12 may be configured to perform S210 and S230 in the method 200. When the communication apparatus 10 is configured to perform the method 300 in FIG. 4A and FIG. 4B, the processing unit 11 may be configured to perform S370 in the method 300, and the transceiver unit 12 may be configured to perform S360 and 380 in the method 300. When the communication apparatus 10 is configured to perform the method 400 in FIG. 5A and FIG. 5B, the processing unit 11 may be configured to perform S490 in the method 400, and the transceiver unit 12 may be configured to perform S480 and S4110 in the method 400. It should be further understood that a specific process in which the units perform the foregoing corresponding steps is described in detail in the foregoing method embodiments, and for brevity, details are not described herein.

FIG. 7 is a schematic block diagram of a communication apparatus according to an embodiment of this application. As shown in FIG. 7, the communication apparatus 20 may include a processing unit 21 and a transceiver unit 22.

In a possible design, the communication apparatus 20 may correspond to the second access and management network element in the second network in the foregoing method embodiment. For example, the communication apparatus 20 may be an AMF in the 5G network, or a chip configured in the second access and management network element.

It should be understood that the communication apparatus 20 may correspond to the second access and management network element in the method 300 and method 400 according to embodiments of this application. The communication apparatus 20 may include units configured to perform the method performed by the second access and management network element in the method 300 in FIG. 4A and FIG. 4B and the method 400 in FIG. 5A and FIG. 5B. In addition, the units in the communication apparatus 20 and the foregoing other operations and/or functions are respectively used to implement corresponding procedures of the method 300 in FIG. 4A and FIG. 4B and the method 400 in FIG. 5A and FIG. 5B.

When the communication apparatus 20 is configured to perform the method 300 in FIG. 4A and FIG. 4B, the processing unit 21 may be configured to perform S330 in the method 300, and the transceiver unit 22 may be configured to perform S320, S340, and S360 in the method 300. When the communication apparatus 20 is configured to perform the method 400 in FIG. 5A and FIG. 5B, the processing unit 21 may be configured to perform S440 in the method 400, and the transceiver unit 22 may be configured to perform S430 and S450 in the method 400. It should be further understood that a specific process in which the units perform the foregoing corresponding steps is described in detail in the foregoing method embodiments, and for brevity, details are not described herein.

FIG. 8 is a schematic block diagram of a communication apparatus according to an embodiment of this application. As shown in FIG. 8, the communication apparatus 30 may include a processing unit 31 and a transceiver unit 32.

In a possible design, the communication apparatus 30 may correspond to the policy control network element in the second network in the foregoing method embodiment. For example, the communication apparatus 30 may be a PCF in the 5G network, or a chip configured in the policy control network element.

It should be understood that the communication apparatus 30 may correspond to the policy control network element in the method 300 and method 400 according to embodiments of this application. The communication apparatus 30 may include units configured to perform the method performed by the policy control network element in the method 300 in FIG. 4A and FIG. 4B, and the method 400 in FIG. 5A and FIG. 5B. In addition, the units in the communication apparatus 30 and the foregoing other operations and/or functions are respectively used to implement corresponding procedures of the method 300 in FIG. 4A and FIG. 4B and the method 400 in FIG. 5A and FIG. 5B.

When the communication apparatus 30 is configured to perform the method 300 in FIG. 4A and FIG. 4B, the processing unit 31 may be configured to perform S310 in the method 300, and the transceiver unit 32 may be configured to perform S320 in the method 300. When the communication apparatus 30 is configured to perform the method 400 in FIG. 5A and FIG. 5B, the processing unit 31 may be configured to perform S410 in the method 400, and the transceiver unit 32 may be configured to perform S420 in the method 400. It should be further understood that a specific process in which the units perform the foregoing corresponding steps is described in detail in the foregoing method embodiments, and for brevity, details are not described herein.

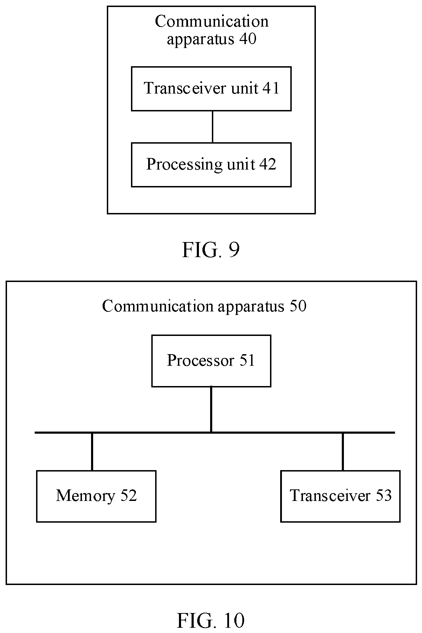

FIG. 9 is a schematic block diagram of a communication apparatus according to an embodiment of this application. As shown in FIG. 9, the communication apparatus 40 may include a processing unit 41 and a transceiver unit 42.

In a possible design, the communication apparatus 40 may correspond to the home subscriber server in the first network in the foregoing method embodiment, for example, may be an HSS in the 4G network, or may be a chip configured in the home subscriber server.

It should be understood that the communication apparatus 40 may correspond to the home subscriber server HSS in the method 400 according to embodiments of this application, and the communication apparatus 40 may include units configured to perform the method 400 in FIG. 5A and FIG. 5B and the method performed by the HSS in the method 400 in FIG. 5A and FIG. 5B. In addition, the units in the communication apparatus 40 and the foregoing other operations and/or functions are used to implement a corresponding procedure of the method 400 in FIG. 5A and FIG. 5B.

The communication apparatus 40 may be configured to perform the method 400 in FIG. 5A and FIG. 5B, the processing unit 41 may be configured to perform S470 in the method 400, and the transceiver unit 42 may be configured to perform S420, S430, and S480 in the method 400. It should be further understood that a specific process in which the units perform the foregoing corresponding steps is described in detail in the foregoing method embodiments, and for brevity, details are not described herein.

FIG. 10 is a structural block diagram of a communication apparatus 50 according to an embodiment of this application. The communication apparatus 50 shown in FIG. 10 includes: a processor 51, a memory 52, and a transceiver 53. The processor 51 is coupled to the memory, and is configured to execute the instruction stored in the memory, to control the transceiver 53 to send a signal and/or receive a signal.

It should be understood that the processor 51 and the memory 52 may be integrated into one processing apparatus, and the processor 51 is configured to execute the program code stored in the memory 52 to implement the foregoing functions. During specific implementation, the memory 52 may further be integrated into the processor 51, or be independent of the processor 51. It should be understood that the processor 51 may also correspond to each processing unit in the foregoing communication apparatus, and the transceiver 53 may correspond to each receiving unit and each sending unit in the foregoing communication apparatus.

It should be further understood that the transceiver 53 may include a receiver (or referred to as a receiving device) and a transmitter (or referred to as a transmitting device). The transceiver may further include one or more antennas. The transceiver 53 may further be a communication interface or an interface circuit.

Specifically, the communication apparatus 50 may correspond to the first access and management network element in the method 200, the second access and management network element in the method 300, the policy control function network element PCF in the method 400, or the home subscriber server HSS in the method 400 according to embodiments of this application. The communication apparatus 50 may include units used for the method performed by the first access and management network element in the method 200 in FIG. 3, units used for the method performed by the second access and management network element in the method 300 in FIG. 4A and FIG. 4B, units or methods used for the method performed by the policy control function network element in the method 400 in FIG. 5A and FIG. 5B, and a unit of a method executed by a home subscriber server HSS in the method 400. In addition, the units in the communication apparatus 50 and the foregoing other operations and/or functions are respectively used to implement corresponding procedures of the method 200 in FIG. 3, the method 300 in FIG. 4A and FIG. 4B, and the method 400 in FIG. 5A and FIG. 5B. It should be further understood that a specific process in which the units perform the foregoing corresponding steps is described in detail in the foregoing method embodiments, and for brevity, details are not described herein.

When the communication apparatus 50 is a chip, where the chip includes a transceiver unit and a processing unit. The transceiver unit may be an input/output circuit or a communication interface; the processing unit may be a processor integrated on the chip, a microprocessor, or an integrated circuit.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by a combination of hardware in the processor and a software module. A software module may be located in a mature storage medium in the art, such as a random access memory, a flash memory, a read-only memory, a programmable read-only memory, an electrically erasable programmable memory, a register. The storage medium is located in the memory, and a processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps in the foregoing method embodiments may be implemented by a hardware integrated logic circuit in the processor, or by instructions in a form of software. The processor may be a general-purpose processor, a digital signal processor (DSP), an application-specific integrated circuit (ASIC), a field programmable gate array (FPGA), or another programmable logic device, discrete gate or transistor logic device, or discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed through a hardware decoding processor, or may be performed through a combination of hardware and software modules in the decoding processor. A software module may be located in a mature storage medium in the art, such as a random access memory, a flash memory, a read-only memory, a programmable read-only memory, an electrically erasable programmable memory, a register. The storage medium is located in the memory, and a processor reads information in the memory and completes the steps in the foregoing methods in combination with hardware of the processor

According to the method provided in embodiments of this application, this application further provides a computer program product. The computer program product includes computer program code, and when the computer program code is run on a computer, the computer is enabled to perform the method in any one of embodiments shown in FIG. 3, FIG. 4A and FIG. 4B, or FIG. 5A and FIG. 5B.

According to the method provided in embodiments of this application, this application further provides a computer-readable medium. The computer readable medium stores program code. When the program code runs on a computer, the computer performs the method in any embodiment shown in FIG. 3, FIG. 4A and FIG. 4B, or FIG. 5A and FIG. 5B

According to the methods provided in embodiments of this application, this application further provides a system. The system includes the foregoing apparatus or device.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may camp on a process and/or an execution thread, and a component may be located on one computer and/or distributed between two or more computers. In addition, these components may be executed from various computer-readable media that store various data structures. For example, the components may communicate through a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first access and management network element in a first network, wireless access assistance information from a second network, wherein the wireless access assistance information comprises wireless access information corresponding to a terminal device and a matching condition corresponding to the wireless access information;
determining, by the first access and management network element based on the wireless access assistance information, wireless access information that needs to be used by the terminal device; and
sending, by the first access and management network element, the wireless access information that needs to be used by the terminal device to an access network device in the first network.

2. The method according to claim 1, wherein the receiving, by a first access and management network element in a first network, wireless access assistance information from a second network comprises:
receiving, by the first access and management network element, the wireless access assistance information of the terminal device that is sent by a second access and management network element in the second network.

3. The method according to claim 2, wherein the receiving, by the first access and management network element, the wireless access assistance information of the terminal device that is sent by a second access and management network element in the second network comprises:
in a mobility management process of the terminal device, receiving, by the first access and management network element, the wireless access assistance information of the terminal device that is sent by the second access and management network element.

4. The method according to claim 2 or 3, wherein the receiving, by the first access and management network element, the wireless access assistance information of the terminal device that is sent by a second access and management network element in the second network comprises:
receiving, by the first access and management network element, context information of the terminal device that is sent by the second access and management network element, wherein the context information of the terminal device comprises the wireless access assistance information of the terminal device.

5. The method according to claim 1, wherein the receiving, by a first access and management network element in a first network, wireless access assistance information from a second network comprises:
receiving, by the first access and management network element via a home subscriber server in the first network, the wireless access assistance information sent by a unified data management function network element in the second network.

6. The method according to claim 5, wherein the receiving, by the first access and management network element via a home subscriber server in the first network, the wireless access assistance information sent by a unified data management function network element in the second network comprises:
receiving, by the first access and management network element via the home subscriber server, context information or subscription information of the terminal device that is sent by the unified data management function network element, wherein the context information or the subscription information comprises the wireless access assistance information of the terminal device.

7. The method according to any one of claims 1 to 6, wherein the wireless access assistance information comprises at least one piece of wireless access information, the matching condition comprises at least one matching condition corresponding to the at least one piece of wireless information, and the determining, by the first access and management network element based on the wireless access assistance information, wireless access information that needs to be used by the terminal device comprises:
determining, by the first access and management network element, that the terminal device meets one or more of the at least one matching condition; and
determining, by the first access and management network element, that wireless access information corresponding to the one or more matching conditions is wireless access information that needs to be used by the terminal device.

8. The method according to claim 7, wherein the one or more matching conditions comprise a matching condition corresponding to the first network, and the wireless access information that needs to be used by the terminal device is used to assist the terminal device in preferentially camping on the first network.

9. The method according to claim 8, wherein the matching condition corresponding to the first network comprises a first time condition, and the wireless access information that needs to be used by the terminal device is used to assist the terminal device in preferentially camping on the first network under the first time condition.

10. The method according to claim 7, wherein the one or more matching conditions comprise a matching condition corresponding to a first frequency of the first network, and the wireless access information that needs to be used by the terminal device is used to assist the terminal device in preferentially camping on the first frequency.

11. The method according to claim 7, wherein the one or more matching conditions comprise a matching condition corresponding to the second network, and the wireless access information that needs to be used by the terminal device is used to assist the terminal device in preferentially camping on the second network.

12. The method according to claim 11, wherein the matching condition corresponding to the second network comprises a second time condition, and the wireless access information that needs to be used by the terminal device is used to assist the terminal device in preferentially camping on the second network under the second time condition.

13. The method according to claim 7, wherein the one or more matching conditions comprise a matching condition corresponding to a second frequency of the second network, and the wireless access information that needs to be used by the terminal device is used to assist the terminal device in preferentially camping on the second frequency.

14. The method according to any one of claims 1 to 13, wherein the wireless access information comprises a radio access technology RAT/frequency selection priority index.

15. The method according to any one of claims 1 to 13, wherein the wireless access information comprises a subscriber profile ID SPID.

16. The method according to any one of claims 1 to 7, wherein the matching condition comprises at least one of the following matching information:
user type information corresponding to the terminal device, time information, location information of the terminal device, service type information used by the terminal device, and network load information.

17. The method according to any one of claims 1 to 13, wherein the first network comprises a 4th generation 4G network, and the second network comprises a 5th generation 5G network.

18. A communication method, comprising:
obtaining, by a second access and management network element in a second network, wireless access assistance information of a terminal device, wherein the wireless access assistance information comprises wireless access information corresponding to the terminal device and a matching condition corresponding to the wireless access information; and
sending, by the second access and management network element, the wireless access assistance information to a first access and management network element in a first network, wherein the wireless access assistance information is used by the first access and management network element to determine wireless access information that needs to be used by the terminal device and send the wireless access information that needs to be used by the terminal device to an access network device in the first network.

19. A communication method, comprising:
receiving, by a first access and management network element in a first network, wireless access assistance information from a second network, wherein the wireless access assistance information comprises wireless access information corresponding to a terminal device and a matching condition corresponding to the wireless access information;
determining, by the first access and management network element based on the wireless access assistance information, wireless access information that needs to be used by the terminal device;
sending, by the first access and management network element, the wireless access information that needs to be used by the terminal device to an access network device in the first network; and
receiving, by the access network device, the wireless access information that needs to be used by the terminal device.

20. A communication apparatus, comprising:
a transceiver unit, configured to receive wireless access assistance information from a second network, wherein the wireless access assistance information comprises wireless access information corresponding to a terminal device and a matching condition corresponding to the wireless access information; and
a processing unit, configured to determine, based on the wireless access assistance information, wireless access information that needs to be used by the terminal device, wherein
the transceiver unit is further configured to send, to an access network device in a first network, the wireless access information that needs to be used by the terminal device.

21. The apparatus according to claim 20, wherein the transceiver unit is specifically configured to:
receive the wireless access assistance information of the terminal device that is sent by a second access and management network element in the second network.

22. The apparatus according to claim 20, wherein the transceiver unit is specifically configured to:
in a mobility management process of the terminal device, receive the wireless access assistance information of the terminal device that is sent by the second access and management network element.

23. The apparatus according to claim 21 or 22, wherein the transceiver unit is specifically configured to:
receive context information of the terminal device that is sent by the second access and management network element, wherein the context information of the terminal device comprises the wireless access assistance information of the terminal device.

24. The apparatus according to claim 20, wherein the transceiver unit is specifically configured to:
receive, via a home subscriber server in the first network, the wireless access assistance information sent by a unified data management function network element in the second network.

25. The apparatus according to claim 24, wherein the transceiver unit is specifically configured to:
receive, via the home subscriber server, context information or subscription information of the terminal device that is sent by the unified data management function network element, wherein the context information or the subscription information comprises the wireless access assistance information of the terminal device.

26. The apparatus according to any one of claims 20 to 25, wherein the wireless access assistance information comprises at least one piece of wireless access assistance information, the matching condition comprises at least one matching condition respectively corresponding to the at least one piece of wireless assistance information, and the processing unit is specifically configured to:
determine that the terminal device meets one or more of the at least one matching condition; and
determine that wireless access information corresponding to the one or more matching conditions is the wireless access information that needs to be used by the terminal device.

27. The apparatus according to claim 26, wherein the one or more matching conditions comprise a matching condition corresponding to the first network, and the wireless access information that needs to be used by the terminal device is used to assist the terminal device in preferentially camping on the first network.

28. The apparatus according to claim 27, wherein the matching condition corresponding to the first network comprises a first time condition, and the wireless access information that needs to be used by the terminal device is used to assist the terminal device in preferentially camping on the first network under the first time condition.

29. The apparatus according to claim 26, wherein the one or more matching conditions comprise a matching condition corresponding to a first frequency of the first network, and the wireless access information that needs to be used by the terminal device is used to assist the terminal device in preferentially camping on the first frequency.

30. The apparatus according to claim 26, wherein the one or more matching conditions comprise a matching condition corresponding to the second network, and the wireless access information that needs to be used by the terminal device is used to assist the terminal device in preferentially camping on the second network.

31. The apparatus according to claim 30, wherein the matching condition corresponding to the second network comprises a second time condition, and the wireless access information that needs to be used by the terminal device is used to assist the terminal device in preferentially camping on the second network under the second time condition.

32. The apparatus according to claim 26, wherein the one or more matching conditions comprise a matching condition corresponding to a second frequency of the second network, and the wireless access information that needs to be used by the terminal device is used to assist the terminal device in preferentially camping on the second frequency.

33. The apparatus according to any one of claims 20 to 32, wherein the wireless access information comprises a radio access technology RAT/frequency selection priority index.

34. The apparatus according to any one of claims 20 to 32, wherein the wireless access information comprises a subscriber profile ID SPID.

35. The apparatus according to any one of claims 20 to 26, wherein the matching condition comprises at least one of the following matching information:
user type information corresponding to the terminal device, time information, location information of the terminal device, service type information used by the terminal device, and network load information.

36. The apparatus according to any one of claims 20 to 32, wherein the first network comprises a 4th generation 4G network, and the second network comprises a 5th generation 5G network.

37. A communication apparatus, comprising:
a transceiver unit, configured to obtain wireless access assistance information of a terminal device, wherein the wireless access assistance information comprises wireless access information corresponding to the terminal device and a matching condition corresponding to the wireless access information, wherein
the transceiver unit is further configured to send the wireless access assistance information to a first access and management network element in a first network, wherein the wireless access assistance information is used by the first access and management network element to determine wireless access information that needs to be used by the terminal device and send the wireless access information that needs to be used by the terminal device to an access network device in the first network.

38. A communication apparatus, comprising:
a memory, configured to store a computer program; and
a processor, configured to execute the computer program stored in the memory, so that the communication apparatus performs the communication method according to any one of claims 1 to 17 or the communication method according to claim 18 or 19.

39. A computer-readable storage medium, wherein the computer-readable storage medium stores a computer program, and when the computer program is run on a computer, the computer is enabled to perform the communication method according to any one of claims 1 to 17, the communication method according to claim 18, or the communication method according to claim 19.

40. A chip system, comprising a processor, configured to invoke a computer program from a memory and run the computer program, to enable a communication device on which the chip system is mounted to perform the communication method according to any one of claims 1 to 17, the communication method according to claim 18, or the communication method according to claim 19.

41. A communication system, comprising:
a first access and management network element, configured to perform the communication method according to any one of claims 1 to 17; and
an access network device, configured to receive wireless access information that needs to be used by a terminal device and that is sent by the first access and management network element.
